# EUROPEAN PATENT APPLICATION

(11) **EP 4 723 566 A1**
(43) Date of publication of application: **08.04.2026**
(21) Application number: 23939685.6
(22) Date of filing: 01.06.2023
(51) Int. Cl.: H04L 27/26, H04J 13/00

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/020427
(87) International publication number: WO 2024/247210

(57) **Abstract**

A terminal according to an aspect of the present disclosure includes: a receiving section that receives, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords, and a control section that controls, based on the combination, a scheduling restriction for an other terminal. The combination includes an entry indicating a DMRS port using a frequency domain orthogonal cover code (FD-OCC) having a length of 4. An aspect of the present disclosure enables an appropriate DMRS port to be used.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For orthogonalization of a layer, and the like, a reference signal (for example, demodulation reference signal (DMRS)) with a plurality of ports is used.

For future radio communication systems, it is under study to increase the number of DMRS ports as compared with that of any existing specification. However, studies have not yet progressed on how a plurality of DMRS ports are used. Unless it is possible to use an appropriate DMRS port, communication throughput/communication quality may deteriorate.

In view of this, an object of the present disclosure is to provide a terminal, a radio communication method, and a base station that use an appropriate DMRS port.

### Solution to Problem

A terminal according to an aspect of the present disclosure includes: a receiving section that receives, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords, and a control section that controls, based on the combination, a scheduling restriction for an other terminal. The combination includes an entry indicating a DMRS port using a frequency domain orthogonal cover code (FD-OCC) having a length of 4.

### Advantageous Effects of Invention

An aspect of the present disclosure enables an appropriate DMRS port to be used.

### Brief Description of Drawings

[FIG. 1] FIG. 1 shows an example of an existing DMRS port table for DMRS configuration type 1/2 for PDSCH.
[FIG. 2] FIG. 2 shows an example of an existing DMRS port table for DMRS configuration type 1/2 for PUSCH.
[FIG. 3] FIGS. 3A to 3C are each a diagram to show an example of new OCCs (Orthogonal Cover Codes).
[FIG. 4] FIGS. 4A and 4B are diagrams to show examples of association between CDM groups, DMRS ports, and OCCs, in enhanced type 1/enhanced type 2.
[FIG. 5] FIG. 5 shows an example of restriction 1 in enhanced type 1.
[FIG. 6] FIG. 6 shows an example of restriction 2 in enhanced type 1.
[FIG. 7] FIG. 7 shows an example of an antenna port table with respect to DMRS type = enhanced type 1 and maximum length = 1.
[FIG. 8] FIG. 8 shows another example of the antenna port table with respect to DMRS type = enhanced type 1 and maximum length = 1.
[FIG. 9] FIG. 9 shows a first part of an example of an antenna port table with respect to DMRS type = enhanced type 1 and maximum length = 2.
[FIG. 10] FIG. 10 shows a second part of the example of the antenna port table with respect to DMRS type = enhanced type 1 and maximum length = 2.
[FIG. 11] FIG. 11 shows another example of the antenna port table with respect to DMRS type = enhanced type 1 and maximum length = 2.
[FIG. 12] FIG. 12 shows a first part of an example of an antenna port table with respect to DMRS type = enhanced type 2 and maximum length = 1.
[FIG. 13] FIG. 13 shows a second part of the example of the antenna port table with respect to DMRS type = enhanced type 2 and maximum length = 1.
[FIG. 14] FIG. 14 shows another example of the antenna port table with respect to DMRS type = enhanced type 2 and maximum length = 1.
[FIG. 15] FIG. 15 shows a first part of an example of an antenna port table with respect to DMRS type = enhanced type 2 and maximum length = 2.
[FIG. 16] FIG. 16 shows a second part of the example of the antenna port table with respect to DMRS type = enhanced type 2 and maximum length = 2.
[FIG. 17] FIG. 17 shows a third part of the example of the antenna port table with respect to DMRS type = enhanced type 2 and maximum length = 2.
[FIG. 18] FIG. 18 shows a fourth part of the example of the antenna port table with respect to DMRS type = enhanced type 2 and maximum length = 2.
[FIG. 19] FIG. 19 shows another example of the antenna port table with respect to DMRS type = enhanced type 2 and maximum length = 2.
[FIG. 20] FIGS. 20A and 20B show examples of rules A and B for a size of an antenna port field.
[FIG. 21] FIG. 21 is a diagram to show an example of a schematic structure of a radio communication system according to one embodiment.
[FIG. 22] FIG. 22 is a diagram to show an example of a structure of a base station according to one embodiment.
[FIG. 23] FIG. 23 is a diagram to show an example of a structure of a user terminal according to one embodiment.
[FIG. 24] FIG. 24 is a diagram to show an example of a hardware structure of the base station and the user terminal according to one embodiment.
[FIG. 25] FIG. 25 is a diagram to show an example of a vehicle according to one embodiment.

### Description of Embodiments

### (DMRS)

A front-loaded demodulation reference signal (DMRS) is the first DMRS (in the first symbol or a symbol near the first symbol) for faster demodulation. An additional DMRS can be configured by RRC for a high-speed moving terminal (user terminal, User Equipment (UE)) or a high modulation and coding scheme (MCS)/rank. A frequency location of the additional DMRS is the same as that of the front-loaded DMRS.

DMRS mapping type A or B is configured for a time domain. In DMRS mapping type A, DMRS location l_0 is counted by a symbol index in a slot. l_0 is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location l_0 is counted by a symbol index in a PDSCH/PUSCH. l_0 is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding = disabled) and DFT-S-OFDM (transport precoding = enabled). DMRS configuration type 2 is applicable to only CP-OFDM.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

A double-symbol DMRS is used for more DMRS ports (especially for Multi User Multi Input Multi Output (MU-MIMO)). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.
- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same resource element (RE, time and frequency resources) are referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC (Frequency Domain OCC) having a length of 2. In a plurality of DMRS CDM groups (two DMRS CDM groups), two DMRS ports are multiplexed by frequency division multiplexing (FDM).

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC (Time Domain OCC). In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

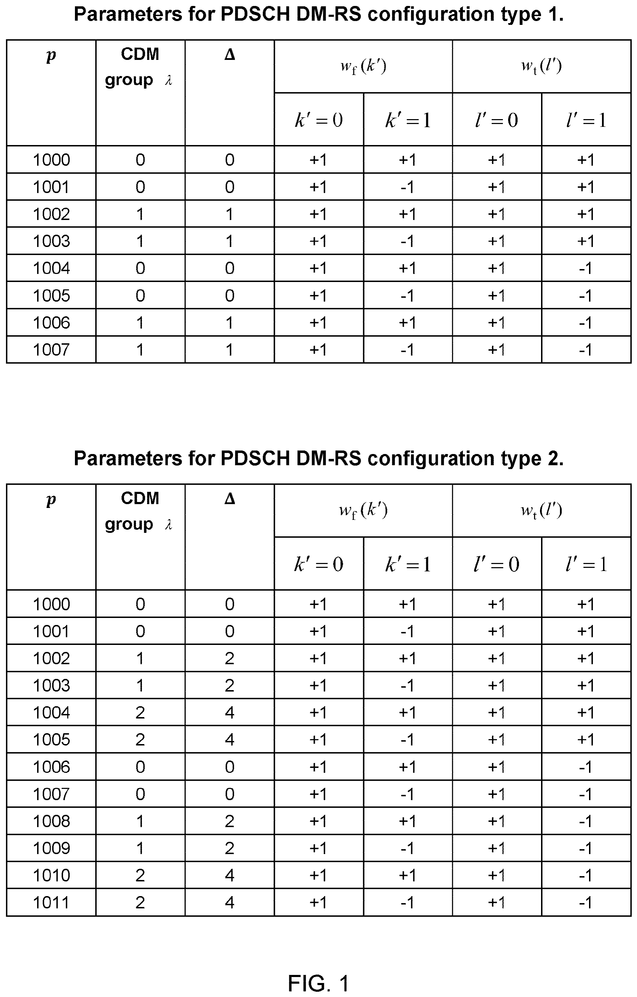

In parameters for a PDSCH DMRS (existing table, existing DMRS port table, FIG. 1), DMRS ports 1000 to 1007 and DMRS ports 1000 to 1011 can be used for DMRS configuration type 1 and DMRS configuration type 2, respectively.

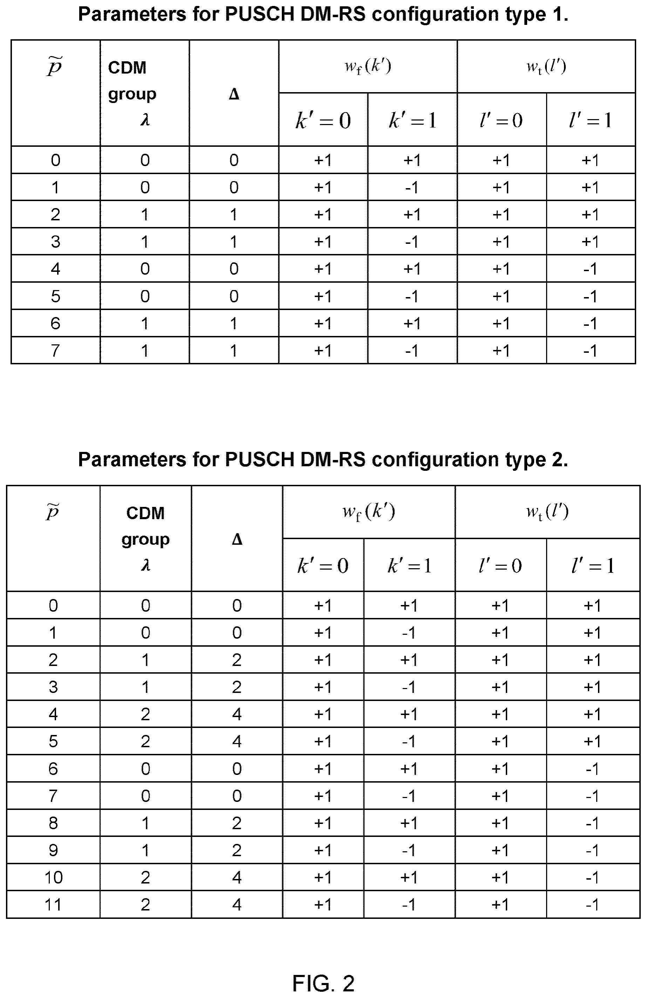

In parameters for a PUSCH DMRS (existing table, existing DMRS port table, FIG. 2), DMRS ports 0 to 7 and DMRS ports 0 to 11 can be used for DMRS configuration type 1 and DMRS configuration type 2, respectively.

### (Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), DMRS ports/CSI-RS ports that are different between layers may be configured. For multi user MIMO (MU-MIMO), DMRS ports/CSI-RS ports that are different between layers in one UE and different between UEs may be configured.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol DMRS.

An OCC in the present disclosure may be interchangeably interpreted as an orthogonal code, orthogonalization, a cyclic shift, and the like.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2 + 2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to 2 REs adjacent to each other in a frequency direction and applying a TD-OCC ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) w_{f}(k') for an FD-OCC and a parameter (which may be referred to as a sequence element or the like) wₜ(l') for a TD-OCC.

Both of the TD-OCC and FD-OCC for the DMRS of Rel-15 NR correspond to an OCC of a sequence length (which may be referred to as an OCC length) = 2. For example, Rel-15 type 1/type 2 DMRS ports may be defined by DMRS ports with an FD-OCC length of 2 (for example, DMRS ports with FD-OCC length = 2).

Thus, possible values of each of k' and l' described above are 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two existing DMRS port tables for PDSCH (association between antenna port numbers and parameters) described above correspond to respective DMRS configuration types 1 and 2. Note that p and Δ indicate an antenna port number and a parameter for shifting (offsetting) a frequency resource, respectively.

For example, {w_{f}(0), w_{f}(1)} = {+1, +1} and {w_{f}(0), w_{f}(1)} = {+1, -1} are applied to antenna ports 1000 and 1001, respectively, thereby orthogonalizing the antenna ports by using an FD-OCC.

Δ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

{wₜ(0), wₜ(1)} = {+1, +1} and {w_{f}(0), wₜ(1)} = {+1, -1} are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.

### {Case 1} Single-symbol DMRS of DMRS configuration type 1

A total number of DMRS ports is 2 (with comb/FDM) x 2 (with FD OCC) = 4 ports.

### {Case 2} Double-symbol DMRS of DMRS configuration type 1

A total number of DMRS ports is 2 (with comb/FDM) x 2 (with FD OCC) x 2 (with TD OCC) = 8 ports.

### {Case 3} Single-symbol DMRS of DMRS configuration type 2

A total number of DMRS ports is 3 (with FDM) x 2 (with FD OCC) = 6 ports.

### {Case 4} Double-symbol DMRS of DMRS configuration type 2

A total number of DMRS ports is 3 (with comb) x 2 (with FD OCC) x 2 (with TD OCC) = 12 ports.

For Rel. 18, it is studied that the total numbers of DMRS ports are doubled to 8, 16, 12, and 24 for Cases 1, 2, 3, and 4, respectively.

For the increased numbers of DMRS ports, the following five options (methods for increasing the number of DMRS ports) are under study.

### <Option 1>

### - Introduction of a new OCC having a length (for example, 4 or 6) greater than that of an existing OCC.

In Option 1, items to be studied include a possibility of performance degradation, a possibility of scheduling restriction, backward compatibility, and the like in a case of a large delay spread.

### <Option 2>

### - Use of a TD-OCC over a plurality of non-consecutive DMRS symbols (for example, a TD-OCC over a front-loaded DMRS/additional DMRS).

In Option 2, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

### <Option 3>

### - Increasing the number of CDM groups (for example, increasing the number of combs/the number of times of FDM).

In Option 3, items to be studied include a possibility of performance degradation, backward compatibility, and the like in a case of a large delay spread.

### <Option 4>

### - Increasing the number of orthogonal DMRS ports by reusing additional DMRS symbols.

In Option 4, items to be studied include a possibility of performance degradation, a possibility of a limited DMRS configuration (for example, the number of additional DMRSs is limited), backward compatibility, and the like in a case of a high UE speed.

### <Option 5>

### - Use of a TD-OCC over a plurality of non-consecutive DMRS symbols, the TD-OCC being combined with an FD-OCC/FDM (reusing additional DMRS symbols to improve channel estimation performance).

In Option 5, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

Option 1/3 may be supported. In addition, a TD OCC may be supported. A difference between Options 2 and 5 may be whether to support RRC-based semi-static switching between an FD-OCC and a TD-OCC or DCI-based dynamic switching between an FD-OCC and a TD-OCC.

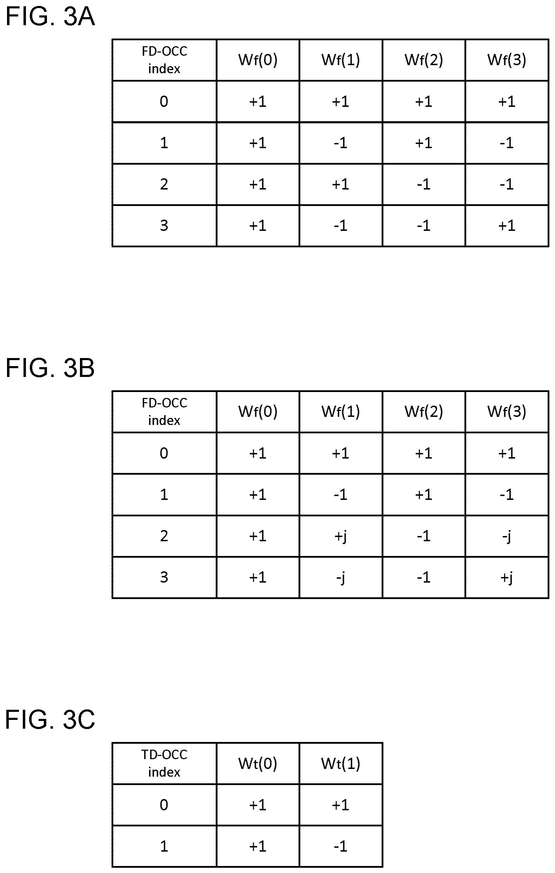

In Option 5 for the methods for increasing the number of DMRS ports described above, as shown in an example in FIG. 3, a new FD-OCC having a length of 4 may be applied, a new TD-OCC having a length of 2 may be applied to a plurality of non-consecutive DMRS symbols, and the number of DMRS ports in one CDM group may be 4. In this case, a reception side decodes one of the FD-OCC and the TD-OCC, thereby allowing signals to be separated from each other, which has an advantage over Option 1/3. For example, the reception side can perform decoding by using only the FD-OCC when using the TD-OCC causes issues such as a case that a characteristic (orthogonality) deteriorates in high-speed movement, a case that channel estimation cannot be started even when only a front-loaded DMRS symbol is received, which requires an additional DMRS symbol to be received, thus leading to delay in PDSCH decoding, and the like. For example, the reception side can perform decoding by using only the TD-OCC when using the FD-OCC causes issues such as a case that a characteristic (orthogonality) deteriorates in a case of a large delay spread, and the like.

In Option 5 for increasing the number of DMRS ports described above, a new FD-OCC having a length of 6 may be applied, and a new TD-OCC having a length of 2 may be applied to a plurality of non-consecutive DMRS symbols.

In this manner, Rel. 18 or later versions supports a new FD-OCC longer than 2. DMRS ports for type 1/type 2 for Rel. 18 or later versions may be referred to as, for example, Rel-18 enhanced type 1/enhanced type 2 DMRS ports. Enhanced type 1/enhanced type 2 may be referred to as eType 1/eType 2.

For example, Rel-18 eType 1/eType 2 DMRS ports may be defined by DMRS ports with an FD-OCC length longer than 2 (for example, DMRS ports with FD-OCC length > 2). For example, the FD-OCC length for the Rel-18 eType 1/eType 2 DMRS ports may equal 4.

Note that a type 1/type 2 DMRS port with an FD-OCC length = 2 defined by Rel. 15 may be referred to as a Rel-15 type 1/type 2 DMRS port.

A Rel-18 eType 1 DMRS port may obtain port index p = #1000 to #1015. For example, the same DMRS port indices (DMRS ports #1000 to #1007) as those of Rel-15 DMRS ports may be used for DMRS ports with new FD-OCCs #0 and #1. DMRS port indices (DMRS ports #1008 to #1015) different from those of Rel-15 DMRS ports may be used for DMRS ports with new FD-OCCs #2 and #3.

A Rel-18 eType 2 DMRS port may obtain port index p = #1000 to #1023. The same DMRS port indices (DMRS ports #1000 to #1011) as those of Rel-15 DMRS ports may be used for DMRS ports with new FD-OCCs #0 and #1. DMRS port indices (DMRS ports #1012 to #1023) different from those of Rel-15 DMRS ports may be used for DMRS ports with new FD-OCCs #2 and #3.

### (New OCC for PDSCH/PUSCH DMRS)

For Rel. 18, as new OCCs for PDSCH/PUSCH DMRS (enhanced type 1/enhanced type 2 DMRS), a length-4 FD-OCC and a length-2 TD-OCC are supported. FIGS. 3A to 3C are each a diagram to show an example of such new OCCs. The FD-OCC and the TD-OCC may each be simply referred to as an OCC.

As shown in FIG. 3A, a length-4 FD-OCC based on a four-by-four Walsh matrix (sequence) may be defined. In FIG. 3A, four sequences are obtained for FD-OCC index i = {0, 1, 2, 3}. The Walsh matrix may be interpreted as a Hadamard code. The OCC based on the Walsh matrix (sequence) is beneficial to DL reception (for example, reception of a PDSCH).

As shown in FIG. 3B, a length-4 OCC based on a cyclic shift may be defined. In FIG. 3B, four sequences are obtained with use of cyclic shifts {i·0, i·π, i·π/2, i·3π/2} for FD-OCC index i = {0, 1, 2, 3}. The OCC based on the cyclic shift is beneficial to UL transmission (for example, transmission of a PUSCH).

As shown in FIG. 3C, a length-2 TD-OCC may be defined. In FIG. 3C, two sequences are obtained for TD-OCC index i = {0, 1}.

In association with the OCCs shown in FIG. 3, a table (association between port indices, CDM group indices, and new OCC indices) for an enhanced type 1/enhanced type 2 DMRS may be defined. A PDSCH port index may be indicated by a number obtained by adding 1000 to a PUSCH port index.

The new FD-OCC may be any one of the OCCs described above.

In each of FIGS. 3A and 3B, length-4 OCCs #0 and #1 (OCCs corresponding to OCC indices 0 and 1) have the first and second halves, each half being the same as length-2 OCCs #0 and #1 (OCCs corresponding to OCC indices 0 and 1) shown in FIG. 3C, for example.

In the present disclosure, an OCC (FD-OCC/TD-OCC) corresponding to OCC index i may be referred to as OCC #i.

Part of the plurality of sequences of the new FD-OCC may be associated with a Rel-15 DMRS port index.

When a length-2 FD-OCC is used, a Rel-15 DMRS port table for DMRS configuration type 1 and a Rel-15 DMRS port table for DMRS configuration type 2 may be used.

Enhanced DMRS configuration type 1 (DMRS enhanced type 1, DMRS enhanced type = 1, DMRS eType 1) uses frequency domain arrangement of DMRS configuration type 1 (DMRS type 1, DMRS type = 1, DMRS Type 1) and a new FD-OCC. Enhanced DMRS configuration type 2 (DMRS enhanced type 2, DMRS enhanced type = 2, DMRS eType 2) uses frequency domain arrangement of DMRS configuration type 2 (DMRS type 2, DMRS type = 2, DMRS Type 2) and a new FD-OCC.

In the present disclosure, DMRS configuration type 1, DMRS type 1, DMRS type = 1, and DMRS Type 1 may be interchangeably interpreted. In the present disclosure, DMRS configuration type 2, DMRS type 2, DMRS type = 2, and DMRS Type 2 may be interchangeably interpreted. In the present disclosure, enhanced DMRS configuration type 1, DMRS enhanced type 1, DMRS enhanced type = 1, and DMRS eType 1 may be interchangeably interpreted. In the present disclosure, enhanced DMRS configuration type 2, DMRS enhanced type 2, DMRS enhanced type = 2, and DMRS eType 2 may be interchangeably interpreted.

In the present disclosure, a maximum DMRS length and maxLength may be interchangeably interpreted.

In the present disclosure, an existing FD-OCC, a length-2 FD-OCC, a Rel-15 FD-OCC, and w_{f}(k') may be interchangeably interpreted. In each embodiment, a new FD-OCC, an FD-OCC longer than 2, a Rel-18 FD-OCC, and w_{f}(k') may be interchangeably interpreted.

### (CDM Group)

As described above, a plurality of DMRS ports mapped to the same RE (time and frequency resources) may be referred to as a DMRS CDM group.

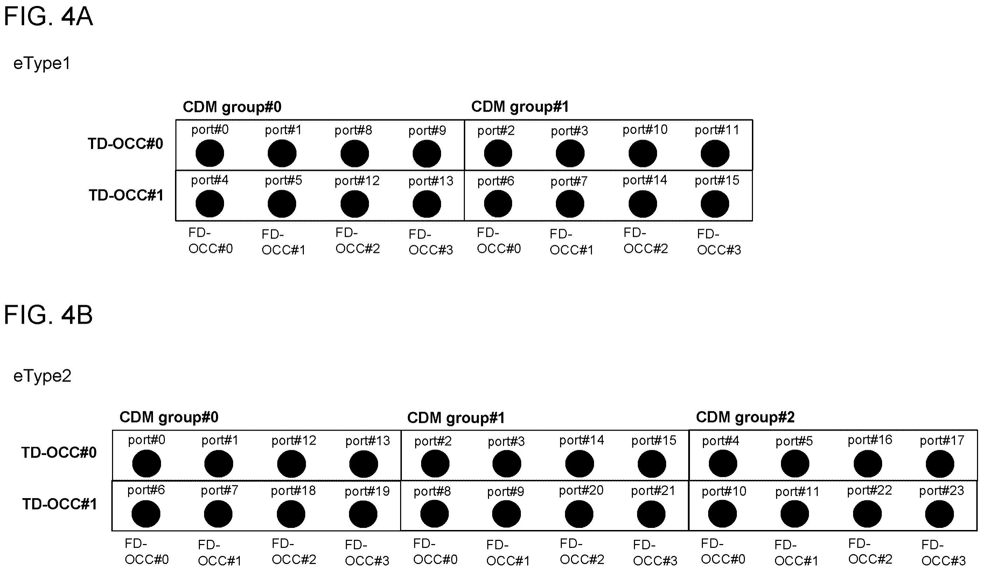

FIG. 4A is a diagram to show an example of association between CDM groups, DMRS ports, and OCCs, in enhanced type 1. FIG. 4B is a diagram to show an example of association between CDM groups, DMRS ports, and OCCs, in enhanced type 2. The DMRS ports of FIGS. 4A and 4B may be referred to as enhanced DMRS ports. Note that FIGS. 4A and 4B are each applicable to both the single-symbol DMRS and double-symbol DMRS.

As shown in FIG. 4A, for DMRS configuration enhanced type 1 and the single-symbol DMRS, eight DMRS ports (ports #0 to #3, #8 to #11) can be used. In each DMRS CDM group (each of CDM groups #0 to #1), four DMRS ports (ports #0 to #1, #8 to #9, ports #2 to #3, #10 to #11) are multiplexed by a length-4 FD-OCC (FD-OCCs #0 to #3). In a plurality of DMRS CDM groups (two DMRS CDM groups (CDM groups #0 to #1)), two DMRS ports are multiplexed by FDM.

As shown in FIG. 4A, in a case of DMRS configuration enhanced type 1 and the double-symbol DMRS, eight DMRS ports (ports #4 to #7, #12 to #15) can be further used. In each DMRS CDM group (each of CDM groups #0 to #1), four DMRS ports (ports #4 to #5, #12 to #13, ports #6 to #7, #14 to #15) are multiplexed by a length-4 FD-OCC (FD-OCCs #0 to #3). In a plurality of DMRS CDM groups (two DMRS CDM groups (CDM groups #0 to #1)), two DMRS ports are multiplexed by FDM. Furthermore, two DMRS ports in a time direction are multiplexed by a length-2 TD-OCC (TD-OCCs #0 to #1). In other words, a plurality of (two) CDM groups with the same index are multiplexed by TDM.

In enhanced type 1 shown in FIG. 4A, DMRS ports corresponding to CDM group #0 are {ports #0, #1, #8, #9} and {ports #4, #5, #12, #13}, and DMRS ports corresponding to CDM group #1 are {ports #2, #3, #10, #11} and {ports #6, #7, #14, #15}.

As shown in FIG. 4B, for DMRS configuration enhanced type 2 and the single-symbol DMRS, twelve DMRS ports (ports #0 to #5, #12 to #17) can be used. In each DMRS CDM group (each of CDM groups #0 to #2), four DMRS ports (ports #0 to #1, #12 to #13, ports #2 to #3, #14 to #15, ports #4 to #5, #16 to #17) are multiplexed by a length-4 FD-OCC (FD-OCCs #0 to #3). In a plurality of DMRS CDM groups (three DMRS CDM groups (CDM groups #0 to #2)), three DMRS ports are multiplexed by FDM.

As shown in FIG. 4B, in a case of DMRS configuration enhanced type 2 and the double-symbol DMRS, twelve DMRS ports (ports #6 to #11, #18 to #23) can be further used. In each DMRS CDM group (each of CDM groups #0 to #2), four DMRS ports (ports #6 to #7, #18 to #19, ports #8 to #9, #20 to #21, ports #10 to #11, #22 to #23) are multiplexed by a length-4 FD-OCC (FD-OCCs #0 to #3). In a plurality of DMRS CDM groups (three DMRS CDM groups (CDM groups #0 to #2)), three DMRS ports are multiplexed by FDM. Furthermore, two DMRS ports in a time direction are multiplexed by a length-2 TD-OCC (TD-OCCs #0 to #1). In other words, a plurality of (two) CDM groups with the same index are multiplexed by TDM.

In enhanced type 2 shown in FIG. 4B, DMRS ports corresponding to CDM group #0 are {ports #0, #1, #12, #13}, {ports #6, #7, #18, #19}, DMRS ports corresponding to CDM group #1 are {ports #2, #3, #14, #15}, {ports #8, #9, #20, #21}, and DMRS ports corresponding to CDM group #2 are {ports #4, #5, #16, #17}, {ports #10, #11, #22, #23}.

### (DMRS Port Combination)

It is studied that, in antenna port indication for DMRS ports of enhanced type 1/enhanced type 2 for PDSCH with a maximum DMRS length = 1/2, all of port combinations of some categories below can be indicated.
(Category 1) A combination of a plurality of indices of existing ports (p = 0 to 7 for enhanced type 1, p = 0 to 11 for enhanced type 2).
(Category 2) A combination of a plurality of indices of new ports (p = 8 to 15 for enhanced type 1, p = 12 to 23 for enhanced type 2).
(Category 3) A combination of existing port indices and new port indices in one CDM group with at least a maximum DMRS length = 1 (a combination of at least one of up to 4 ports from p = {0, 1, 8, 9} and up to 4 ports from p = {2, 3, 10, 11} for enhanced type 1, a combination of at least one of up to 4 ports from p = {0, 1, 12, 13} and up to 4 ports from p = {2, 3, 14, 15} for enhanced type 2). Only one CDM group is used for rank 4 or less. More than one CDM group can be used for a rank greater than 4.

A DMRS port for PDSCH is determined by p + 1000.

It is studied that, for DMRS ports of enhanced type 1/enhanced type 2 for PDSCH/PUSCH, a maximum DMRS length = 1 and a rank = 5, 6, 7, 8 are supported.

### (MU-MIMO Scheduling Restriction (MU Scheduling Restriction))

For MU-MIMO, a plurality of DMRSs for a plurality of UEs are multiplexed. The plurality of DMRSs may be CDMed in one CDM group by using different OCCs, or may be FDMed between a plurality of CDM groups by using different subcarriers (Combs). In the CDM, a problem (near-far problem) is caused by a difference between distances from a base station to the plurality of respective UEs. Using an FD-OCC in a flat fading environment does not cause inter-code interference, but using an FD-OCC in a frequency-selective fading environment causes inter-code interference, thus leading to quality degradation. In order to prevent this, a MU-MIMO scheduling restriction (existing MU-MIMO scheduling restriction, existing MU scheduling restriction) is defined.

Note that, likewise, using a TD-OCC in an environment without change in a time-domain channel state (stationary state) does not cause inter-code interference, but using a TD-OCC in an environment with change in a time-domain channel state (movement state) causes inter-code interference, thus leading to quality degradation.

The following MU-MIMO scheduling restrictions are defined for a PDSCH using DMRS configuration type 1. - In DMRS configuration type 1, when one codeword (CW) is scheduled for a UE, and antenna port mapping with an index {2, 9, 10, 11, 30} is allocated in an existing antenna port table for DMRS configuration type 1, or when two CWs are scheduled for a UE, the UE may assume that a remaining orthogonal antenna port is not associated with PDSCH transmission to another UE.

For a case where the number 1 of DMRS CDM groups without data and rank 1 (one DMRS port) are indicated, there may be no restriction in the same CDM group (a DMRS port of the UE may be CDMed with one DMRS port of another UE). For a case where the number 1 of DMRS CDM groups without data and rank 2 (two DMRS ports) are indicated, all the DMRS ports in the same CDM group are indicated, and thus in the same CDM group, a DMRS port of the UE cannot be CDMed with a DMRS port of another UE. For a case where the number 2 of DMRS CDM groups without data and rank 3 (three DMRS ports) are indicated, three DMRS ports of four DMRS ports in two CDM groups are indicated, and thus one DMRS port is unused, but cannot be CDMed with one DMRS port of another UE. For a case where the number 2 of DMRS CDM groups without data and rank 4 (four DMRS ports) are indicated, all the DMRS ports in the same CDM group are indicated, and thus in the same CDM group, a DMRS port of the UE cannot be CDMed with a DMRS port of another UE.

When a UE is configured with a Rel-18 DMRS port, the UE may follow at least one of some restrictions below.

### - Restriction 1

An existing MU-MIMO scheduling restriction is applied. This means that many DMRS ports are not used for another UE. For example, in a case where a DMRS port combination of category 1/2 is used for a rank greater than 4 and 2 CWs, no unused port is used for another UE.

### - Restriction 2

A MU-MIMO scheduling restriction is updated. The UE may follow at least one of some restrictions below.

### -- Restriction 2-1

There is no existing MU-MIMO scheduling restriction. There may be no MU-MIMO scheduling restriction for a Rel-18 DMRS port.

### -- Restriction 2-2

Some new MU-MIMO scheduling restrictions are introduced.

### -- Restriction 2-3

There is no MU-MIMO scheduling restriction over a plurality of different CDM groups, and a new MU-MIMO scheduling restriction in one CDM group is introduced.

The MU-MIMO scheduling restriction in restriction 1 may be a restriction that, when a DMRS port combination using two CDM groups #0 and #1 is indicated for enhanced type 2, a DMRS port in another CDM group #2 cannot be applied to another UE.

The MU-MIMO scheduling restriction in restriction 2-3 may, when a DMRS port combination using two CDM groups #0 and #1 is indicated for enhanced type 2, allow a DMRS port in another CDM group #2 to be allocated to another UE.

### (Analysis)

For the MU scheduling restriction for a Rel-18 DMRS port for a PDSCH, some restrictions (new MU scheduling restrictions) below are under study.
- Restriction 1: In a case where a plurality of DMRS ports for a certain UE are provided in more than one CDM groups, the certain UE does not expect any DMRS port from a UE (a co-scheduled UE, another UE) scheduled together in a CDM group the same as the CDM groups for the certain UE.
- Restriction 2: Further, with respect to a dual-symbol DMRS, if a plurality of DMRS ports for a certain UE are associated with more than one TD-OCCs in one CDM group, the certain UE does not expect any DMRS port from a UE scheduled together in a CDM group the same as the CDM group for the certain UE.

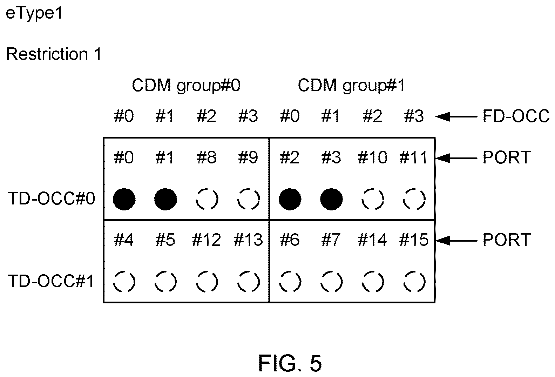

With respect to restriction 1, as shown in an example in FIG. 5, it is assumed that DMRS ports (0, 1, 2, 3) are allocated to a certain UE. The DMRS ports (0, 1) are in CDM group #0 and the DMRS ports (2, 3) are in CDM group #1.

In a case where no DMRS of another UE is assumed to be multiplexed in the CDM groups for the certain UE, the UE is sufficient to perform channel estimation (DMRS de-spreading) for four ports.

In contrast, in a case where a DMRS of another UE is assumed to be multiplexed in the CDM groups for the certain UE, at least one of some operations below is required.
- For the single-symbol DMRS, the certain UE is to perform channel estimation for four ports from a received signal, in each CDM group, and thus channel estimation for eight ports in total is required for the certain UE.
- For the double-symbol DMRS, the certain UE is to perform channel estimation for eight ports from a received signal, in each CDM group, and thus channel estimation for sixteen ports in total is required for the certain UE.

With restriction 1 defined in a specification, the operations for the case where a DMRS of another UE is assumed to be multiplexed in the CDM groups of the certain UE can be avoided, allowing the UE load to be reduced. Besides, the multiplexing capacity is made small.

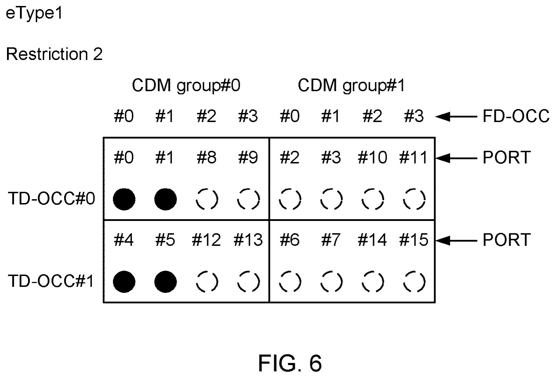

With respect to Restriction 2, as shown in an example in FIG. 6, it is assumed that DMRS ports (0, 1, 4, 5) are allocated to a certain UE. The DMRS ports (0, 1) are in CDM group #0 and are applied with TD-OCC #0. The DMRS ports (4, 5) are in CDM group #0 and are applied with TD-OCC #1.

In a case where no DMRS of another UE is assumed to be multiplexed in the CDM group for the certain UE, the UE is sufficient to perform channel estimation (DMRS de-spreading) for four ports.

In contrast, in a case where a DMRS of another UE is assumed to be multiplexed in the CDM group for the certain UE, an operation below is required.
- For the double-symbol DMRS, the certain UE is to perform channel estimation for eight ports from a received signal, in each CDM group, and thus channel estimation for sixteen ports in total is required for the certain UE.

With Restriction 2 defined in a specification, the operation for the case where a DMRS of another UE is assumed to be multiplexed in the CDM group of the certain UE can be avoided, allowing the UE load to be reduced. Besides, the multiplexing capacity is made small.

The Rel-18 enhanced type 1 DMRS is described above, and the description similarly applies to the Rel-18 enhanced type 2 DMRS.

In Rel. 15 to Rel. 17, the existing MIMO scheduling restriction described above is defined. The existing MIMO scheduling restriction is not as strict as restriction 1/2. According to the existing MIMO scheduling restriction, for the Rel-15 type 1 DMRS, restriction 1 is applied, but restriction 2 may not need to be applied. For the Rel-15 type 2 DMRS, restriction 1 may not need to be applied and restriction 2 may not need to be applied.

As described above, while the Rel-18 DMRS port (a DMRS using a length-4 FD-OCC) is under study, a new MU-MIMO scheduling restriction between UE 1 configured with an existing DMRS port (for example, the Rel-15 DMRS using a length-2 FD-OCC) and UE 2 configured with the Rel-18 DMRS port is also under study. Furthermore, a new MU-MIMO scheduling restriction (restriction 1/2 described above) between two UEs each configured with the Rel-18 DMRS port is also under study.

For example, for the restriction between UE 1 configured with the Rel-15 DMRS and UE 2 configured with the Rel-18 DMRS port, whether MU-MIMO is possible may be judged depending on a CDM group that the UEs belong to. Whether U-MIMO is possible may be judged depending on whether each UE is an existing UE (Rel. 15 to Rel. 17) or a Rel-18 UE.

Nevertheless, for application of restriction 1/2 for a case including a UE configured with the Rel-18 DMRS port, there is room for further consideration.

As described above, unless antenna port indication is clear, communication throughput/communication quality may deteriorate.

In view of this, the inventors of the present invention came up with the idea of a method of antenna port indication.

Embodiments according to the present disclosure will be described in detail with reference to the drawings as follows. Note that the embodiments (for example, respective cases) to be described below may each be used individually, or at least two of the embodiments may be employed in combination.

### (Various Interpretations and so on)

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

Note that a CORESET pool may be interpreted as a CORESET pool index, and vice versa.

In the present disclosure, description "Rel. XX" represents 3GPP release. Note, however, that the release number "XX " is an example, and may be replaced with another number.

In the present disclosure, a DMRS, a DL DMRS, a UL DMRS, a PDSCH DMRS and a PUSCH DMRS may be interchangeably interpreted.

In the present disclosure, an RE, an RB, and a PRB may be interchangeably interpreted.

In the present disclosure, an orthogonal sequence, an OCC, an FD OCC, and a TD OCC may be interchangeably interpreted.

In the present disclosure, a DMRS port, an antenna port, a port, and a DMRS port index may be interchangeably interpreted. In the present disclosure, DMRS CDM group(s), CDM group(s), DMRS group(s), DMRS CDM group(s) without data, and the like may be interchangeably interpreted. In the present disclosure, antenna port indication and an antenna port field may be interchangeably interpreted. In the present disclosure, a DMRS configuration type, a DMRS type, and an RRC parameter "dmrs-Type" may be interchangeably interpreted. In the present disclosure, a maximum DMRS length, a maximum number of DMRS symbols, the number of DMRS symbols, and an RRC parameter "maxLength" may be interchangeably interpreted.

In the present disclosure, DMRS type1 (or DMRS type = 1) may mean that an RRC parameter "dmrs-Type" is not configured (for example, the RRC parameter "dmrs-Type" is absent in a DMRS configuration (DMRS-DownlinkConfig information element/DMRS-UplinkConfig information element)), or may mean that "1" (or "type 1" ("type1")) is configured as an RRC parameter related to a DMRS type.

In the present disclosure, a maximum DMRS length = 1 may mean that an RRC parameter "maxLength" is not configured (for example, the RRC parameter "maxLength" is absent in the DMRS configuration (DMRS-DownlinkConfig information element/DMRS-UplinkConfig information element)), or may mean that "1" (or "length of 1" ("len1")) is configured as an RRC parameter related to a maximum DMRS length.

In the present disclosure, a CDM group list, a port group list, and a list may be interchangeably interpreted. In the present disclosure, a CDM group subset, a port group subset, and a group subset may be interchangeably interpreted.

In the present disclosure, a rank, a transmission rank, the number of layers, and the number of antenna ports may be interchangeably interpreted. One codeword being applied and the number of layers being 4 layers or less may be interchangeably interpreted. Two codewords being applied and the number of layers being greater than 4 layers may be interchangeably interpreted.

In the present disclosure, "transform precoding being configured" may be interchangeably interpreted as "transform precoding being configured to be enabled."

Note that, in the present disclosure, "having capability of ..." may be interchangeably interpreted as "supporting/reporting capability of ...."

In the present disclosure, a table and one or a plurality of tables may be interchangeably interpreted.

In the present disclosure, a Rel-15 DMRS port, a Rel-15 type 1/2 DMRS port, and an existing DMRS port may be interchangeably interpreted. In the present disclosure, a Rel-18 DMRS port, a Rel-18 enhanced type 1/2 DMRS port, and a new DMRS port may be interchangeably interpreted. Note that the Rel-18 DMRS port may correspond to a DMRS port with a defined total number of ports more than twice (for example, twice, three times, four times, ...) that of the Rel-15 DMRS port.

In the present disclosure, a DMRS in a case where use of a Rel-15 DMRS port is configured or a case where use of a Rel-18 DMRS port is not configured (not enabled) may be referred to as a Rel-15 DMRS. In the present disclosure, a DMRS in a case where use of a Rel-18 DMRS port is configured (enabled) may be referred to as a Rel-18 DMRS. Among the Rel-15 DMRSs, a DMRS for type 1/2 may be referred to as a Rel-15 type 1/2 DMRS, a type 1/2 DMRS simply, or the like. Among the Rel-18 DMRSs, a DMRS for enhanced type 1/2 may be referred to as a Rel-18 enhanced type 1/2 DMRS, an enhanced type 1/2 DMRS simply, or the like.

In the present disclosure, a Rel-15 DMRS configuration type, a DMRS configuration type, and a type may be interchangeably interpreted. A Rel-18 DMRS configuration type, an enhanced DMRS configuration type, an enhanced type, and an eType may be interchangeably interpreted.

In the present disclosure, an antenna port table, an antenna port indication table, association between an antenna port field value and a DMRS port, association between an antenna port field value, a DMRS port, the number of DMRS CDM groups without data, and a DMRS port, and association between an antenna port field value, a DMRS port, the number of DMRS CDM groups without data, a DMRS port, and the number of front-loaded symbols may be interchangeably interpreted. In the present disclosure, a DMRS port combination, a combination of DMRS ports, and one or more DMRS ports corresponding to one value of an antenna port field may be interchangeably interpreted.

In the present disclosure, an antenna port field value (Value) may be interpreted as a row index.

In the present disclosure, a case that a Rel-18 DMRS port is configured and a case that DMRS enhanced type 1/2 is configured may be interchangeably interpreted.

In an antenna port table in the present disclosure, values of an antenna port field value, the number of DMRS CDM groups without data, and a DMRS port are examples, and other values may be defined.

The present disclosure may be applied to a PDSCH DMRS and may be applied to a PUSCH DMRS. A PUSCH DMRS port index and a PDSCH DMRS port index may be represented as p and p + 1000, respectively. p may be replaced with Value (row index) in a table of the present disclosure.

In a new antenna port table in a case where Rel-18 DMRS ports are used, some or all of DMRS port combinations in an existing antenna port table may be reused. In this case, only a DMRS port among DMRS ports 0 to 7 and only a DMRS port among DMRS ports 0 to 11 may be indicated for DMRS enhanced type 1 and DMRS enhanced type 2, respectively.

A DMRS port for a PDSCH may be indicated by an antenna port field in a DCI format (for example, DCI format 1_1/1_2) for scheduling a PDSCH.

A DMRS port for a PUSCH may be indicated by an antenna port field in a DCI format (for example, DCI format 0_1/0_2) for scheduling a PUSCH.

A UE may refer to a new antenna port table (which may be referred to as an antenna port table, an antenna port indication table, or the like) to judge an antenna port corresponding to a value of the above-described antenna port field.

Note that the UE using Rel-15 DMRS ports may mean that antenna port index p = #0 to #7 and antenna port index p = #0 to #11 are used (available) for type 1 and type 2, respectively. The UE using Rel-18 DMRS ports may mean that antenna port index p = #0 to #15 (or #8 to #15) and antenna port index p = #0 to #23 (or #12 to #23) are used (available) for type 1 and type 2, respectively.

The above-described new antenna port table may be a table for a Rel-18 enhanced type 1/2 DMRS port. It is preferable that the above-described new antenna port table includes, in a DCI codepoint (or a row entry in the table), a DMRS port combination of at least one of categories 1 to 3 described below for a maximum number (which may be referred to as a maximum length and may be given by a higher layer parameter "maxLength") = 1 or 2:
- Category 1: only legacy DMRS ports (DMRS ports defined in Rel. 17 or earlier versions. p = #0 to #7 for eType1, p = #0 to #11 for eType 2)
- Category 2: only new DMRS ports (DMRS ports additionally defined in Rel. 18 or later versions. p = #8 to #15 for eType1, p = #12 to #23 for eType 2)
- Category 3: Legacy DMRS port(s) and new DMRS port(s) in at least one CDM group

A combination of the new DMRS ports of category 2 may be a combination obtained by adding X to port indices of a combination of the DMRS ports of category 1. For example, X may be 8 or greater (for example, 8) in a case of eType1, and may be 12 or greater (for example, 12) in a case of eType2. X described above may be defined in a standard beforehand, may be configured to the UE by higher layer signaling, or may be judged based on a UE capability. This X may be referred to as an offset indicator (offset index) or an offset simply.

The legacy DMRS port(s) and the new DMRS port(s) of category 3 may correspond to, for example, the following combinations:
- Rank number in CDM group: 3 or 4
- CDM group index: 0, 1 for eType1, 0, 1, 2 for eType2
- The number of CDM groups without data: 1, 2 for eType1, 1, 2, 3 for eType2

Note that the legacy DMRS port(s) and the new DMRS port(s) of category 3 may not include all of the above-described combinations. For example, as the number of CDM groups without data corresponding to the legacy DMRS port(s) and the new DMRS port(s) of category 3, (a codepoint corresponding to) any one or both of 1 and 2 may be defined in an antenna port table for eType1, or (a codepoint corresponding to) any one or more than one of 1, 2, and 3 may be defined in an antenna port table for eType2.

The DMRS ports of category 3 may be legacy DMRS port(s) and new DMRS port(s) with a specific rank (for example, rank 3/4) in the same CDM group.

The DMRS ports of category 3 may include, as a combination of legacy DMRS port(s) and new DMRS port(s) in at least one CDM group, the following:
- up to 4 ports from among p = {#0, #1, #8, #9} or {#2, #3, #10, #11} for eType1
- up to 4 ports from among p = {#0, #1, #12, #13}, {#2, #3, #14, #15}, or {#4, #5, #16, #17} for eType2

The above-described combinations may be applied in at least a single TRP.

In category 3, only one CDM group may be used per UE in a case of rank 4 or less. A plurality of CDM groups may be used per UE in a case of rank 4 or more.

In the present disclosure, a configuration for the Rel-18 DMRS port may include at least one of an enhanced type (enhanced type 1 or enhanced type 2) and a maximum length (maximum length = 1 or 2).

In the present disclosure, a MU scheduling restriction, a MU-MIMO scheduling restriction, a MU restriction, an existing MU scheduling restriction, a new MU scheduling restriction, restriction 1, and restriction 2 may be interchangeably interpreted.

In the present disclosure, a specific UE capability, supporting of a new MU scheduling restriction, supporting of easing a MU scheduling restriction/restriction 1/2, and supporting of a Rel-18 DMRS port may be interchangeably interpreted.

In the present disclosure, an enhanced type and an enhanced DMRS configuration type may be interchangeably interpreted.

### (Radio Communication Method)

In an antenna port table indicated in the present disclosure, association between a DMRS port index combination, the number of DMRS CDM groups without data, a row index, and a corresponding entry (various values in the table) may be different. In other words, the order of rows may be switched.

When some of the rows are omitted/deleted (not defined), indices (Values) of the subsequent rows may be moved up. More specifically, in the description below, rows including values enclosed by [] may be deleted from the table. In this case, row indices (row numbers) subsequent to the deleted columns may be moved over (moved up) by the deleted rows. In this manner, some rows in the table are omitted/deleted as necessary, thereby enabling a bit size (number of bits) necessary for indicating a table to be reduced. Consequently, DCI overhead can be reduced. The details are common to the embodiments below.

In the present disclosure, in an antenna port table of each of the aspects, some/all rows may be indicated in common for a table for single-DCI multi-TRP and a table other than the table (may be defined as a common table), or may be defined as separate tables.

In the present disclosure, a UE may assume that a row is added to a table for single-DCI based multi-TRP. In a case of addition of the row, the row may be added to a certain position (for example, the bottom row in the table) or any row.

The UE may assume that the additional row is indicated only in a case where single-DCI based multi-TRP is applied. The case where the single-DCI based multi-TRP is applied may be a case where two active TCI states are indicated for at least one TCI codepoint. Note that the additional row may be indicated irrespective of a case of single-DCI based multi-TRP.

In the table for single-DCI based multi-TRP, all/some of DMRS port combinations corresponding to category 3 may be omitted/deleted. The deletion of category 3 DMRS ports may be applied only in a case with the greater number of rows of a table, such as a case of enhanced type 11 and maximum DMRS length = 2. In the table for single-DCI based multi-TRP, it is preferable that each TRP use a DMRS port of a different CDM group. On the other hand, for category 3 DMRS ports, two TRPs always use DMRS ports of the same CDM group, and thus a use case is absent.

Whether a certain row is added to/omitted from/deleted from the table and whether the certain row can be indicated for the table may be configured/indicated by higher layer signaling/physical layer signaling, or may follow a UE capability.

### <Embodiment 0>

Embodiment 0 relates to a new antenna port table for Rel-18 DMRS ports.

### {Embodiment 0.1}

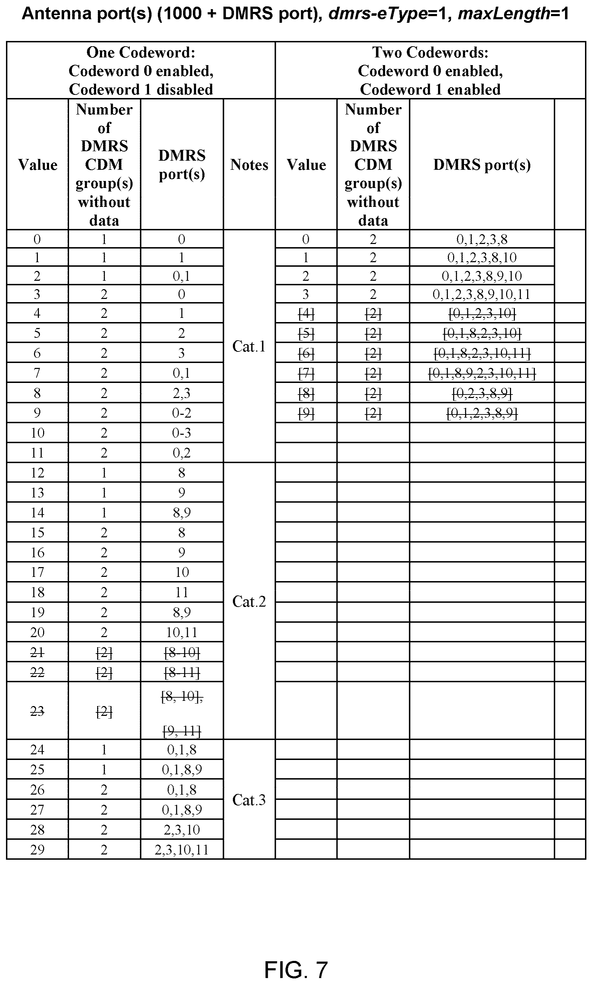

FIG. 7 shows an example of an antenna port table with respect to DMRS type = enhanced type 1 and maximum length = 1.

In FIG. 7, the left side of the table corresponds to 4 layers or less, and is referred to when a PDSCH with one codeword is scheduled. The right side of the table corresponds to 5 layers or more, and is referred to when a PDSCH with two codewords is scheduled. This similarly applies to the following drawings.

(The left side of) the antenna port table of the present example includes DMRS port combinations including only category 1 DMRS ports (existing ports), DMRS port combinations including only category 2 DMRS ports (new ports), and DMRS port combinations including category 3 DMRS ports (both existing ports and new ports).

In the present example, antenna port field values (Values) = 0 to 11, 12 to 23, and 24 to 29 in a case of one codeword (1 CW) correspond to category 1, category 2, and category 3, respectively.

X described above for the category 2 DMRS ports of the present example is X = 8 (DMRS port indices corresponding to antenna port field values = 12 to 23 correspond to respective indices obtained by increasing, by 8, (adding 8 to) all DMRS port indices corresponding to antenna port field values = 0 to 11). This X may be referred to as an offset indicator (offset index) or an offset simply. In this case, the offset is represented as +8. This may similarly apply to an offset in Embodiment 0.2.

The DMRS port combinations for category 3 DMRS ports (corresponding to antenna port field values = 24 to 29) in the present example each relate to rank 3 or 4, and include only DMRS ports in the same CDM group.

In the table of FIG. 7, antenna port field values (Values) = 0 to 9 in a case of two codewords (2 CWs) each correspond to a rank of ranks 5 to 8.

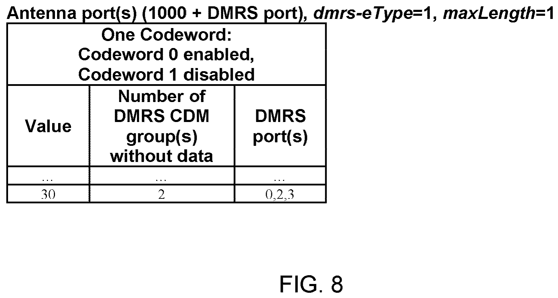

FIG. 8 shows another example of the antenna port table with respect to DMRS type = enhanced type 1 and maximum length = 1. FIG. 8 shows an entry for single-DCI based multi-TRP which may be added to the table of FIG. 7 or may be defined as a table for (dedicated to) single-DCI based multi-TRP separately from and independently of FIG. 7.

In a case where the row shown in FIG. 8 is indicated, the MU scheduling restriction may be applied. In other words, a UE does not expect multiplexing to another DMRS port in the same CDM group.

### {Embodiment 0.2}

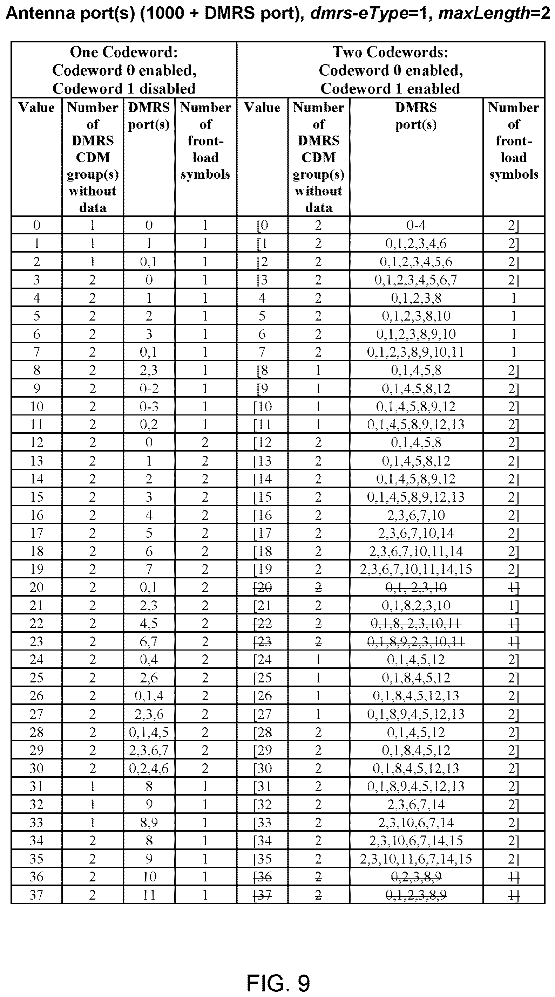

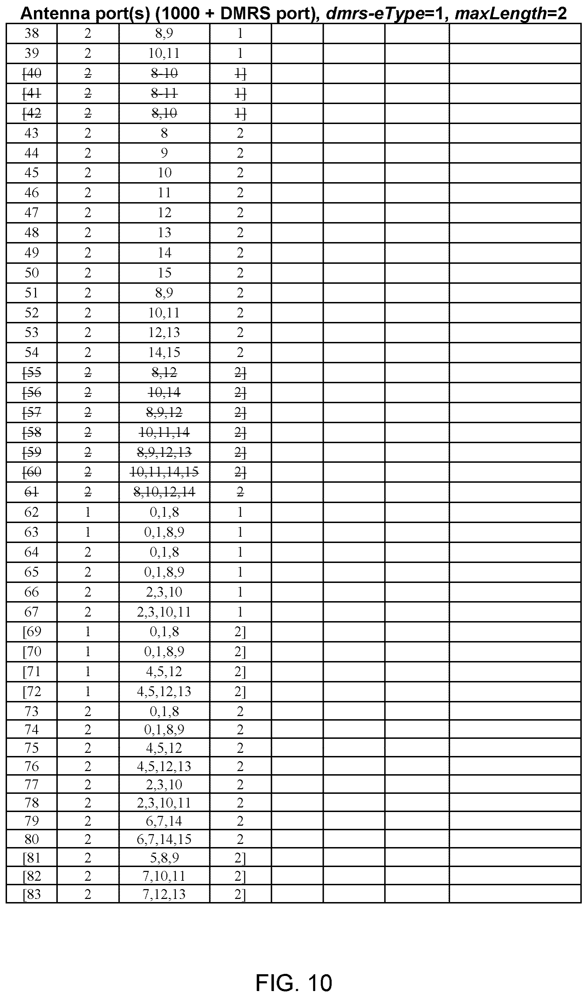

FIG. 9 shows a first part of an example of an antenna port table with respect to DMRS type = enhanced type 1 and maximum length = 2. FIG. 10 shows a second part of the example of the antenna port table with respect to DMRS type = enhanced type 1 and maximum length = 2. The antenna port table according to Embodiment 0.2 is shown over the two drawings, FIGS. 9 and 10, due to the number of rows. In other words, in the present example, FIGS. 9 and 10 are defined as one table with the two drawings combined.

In the antenna port table shown in the present example, Values = 0 to 30, 31 to 61, and 62 to 83 for 1 CW may correspond to category 1, category 2, and category 3, respectively.

In the table of FIG. 9, antenna port field values (Values) = 0 to 37 in a case of two codewords (2 CWs) each correspond to a rank of ranks 5 to 8.

The rows with Values = 69 to 72 may not need to be deleted. The rows with Values = 81 to 83 may be deleted.

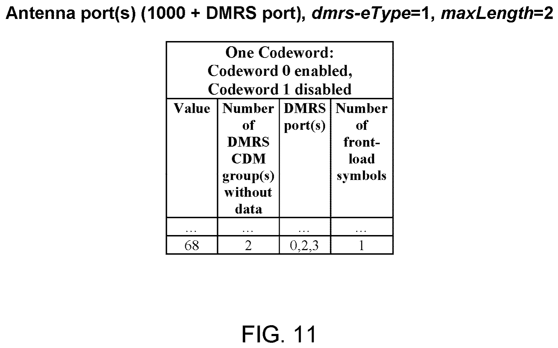

FIG. 11 shows another example of the antenna port table with respect to DMRS type = enhanced type 1 and maximum length = 2. FIG. 11 shows an entry for single-DCI based multi-TRP which may be added to the table of FIGS. 9 and 10 or may be defined as a table for (dedicated to) single-DCI based multi-TRP separately from and independently of FIGS. 9 and 10.

In a case where the row shown in FIG. 11 is indicated, the MU scheduling restriction may be applied. In other words, a UE does not expect multiplexing to another DMRS port in the same CDM group.

### {Embodiment 0.3}

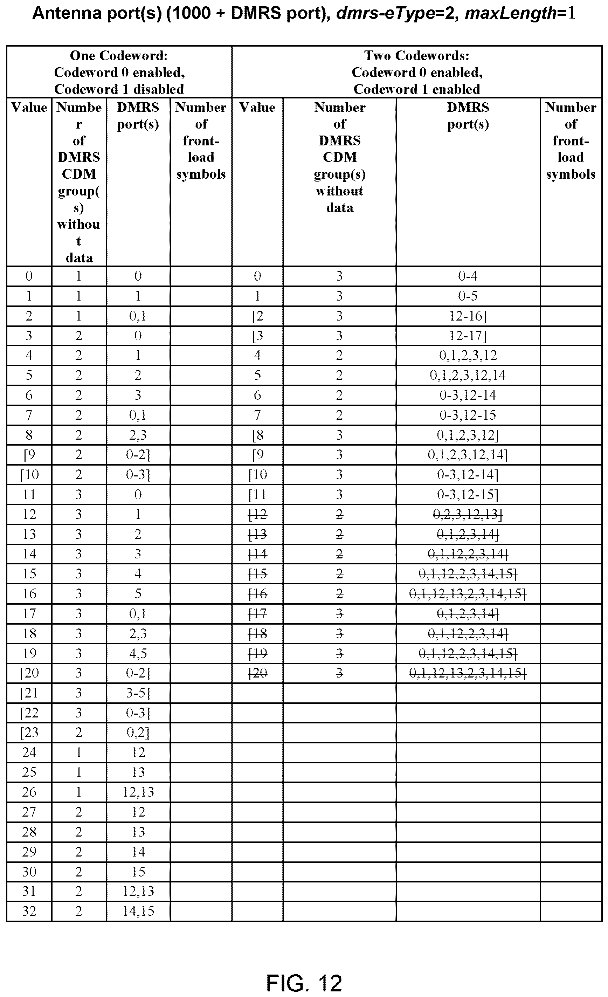

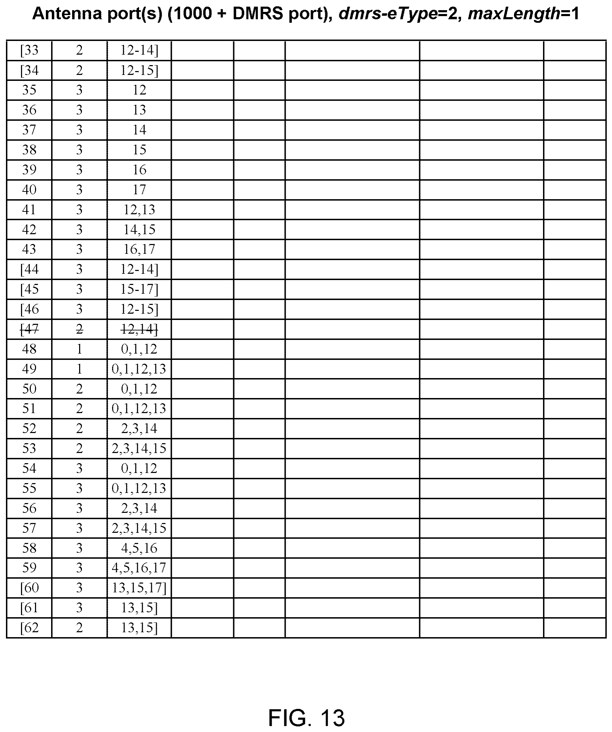

FIG. 12 shows a first part of an example of an antenna port table with respect to DMRS type = enhanced type 2 and maximum length = 1. FIG. 13 shows a second part of the example of the antenna port table with respect to DMRS type = enhanced type 2 and maximum length = 1. The antenna port table according to Embodiment 0.3 is shown over the two drawings, FIGS. 12 and 13, due to the number of rows. In other words, in the present example, FIGS. 12 and 13 are defined as one table with the two drawings combined.

In the antenna port table shown in the present example, Values = 0 to 23, 24 to 47, and 48 to 62 for 1 CW may correspond to category 1, category 2, and category 3, respectively.

In the antenna port table of the present example, a difference in indices between a category 1 DMRS port and a category 2 DMRS port may be +12, for example. The number of CDM groups without data may take 1 to 3. In other words, the offset indicator of category 2 with respect to category 1 may be +12. This may similarly apply to an offset in Embodiment 0.4.

In the table of FIG. 12, antenna port field values (Values) = 0 to 20 in a case of two codewords (2 CWs) each correspond to a rank of ranks 5 to 8.

The rows with Values = 9 to 10 and 20 to 23 may not need to be deleted in a case of applying the MU scheduling restriction. The rows with Values = 33 to 34, 44 to 46, and 60 to 62 may be deleted.

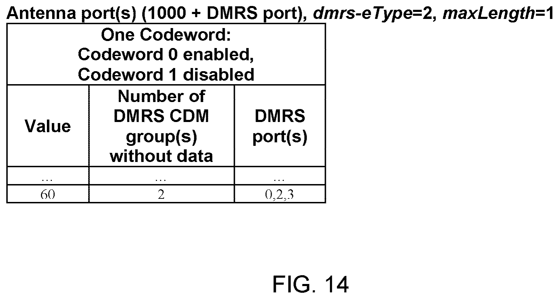

FIG. 14 shows another example of the antenna port table with respect to DMRS type = enhanced type 2 and maximum length = 1. FIG. 14 shows an entry for single-DCI based multi-TRP which may be added to the table of FIGS. 12 and 13 or may be defined as a table for (dedicated to) single-DCI based multi-TRP separately from and independently of FIGS. 12 and 13.

In a case where the row shown in FIG. 14 is indicated, the MU scheduling restriction may be applied. In other words, a UE does not expect multiplexing to another DMRS port in the same CDM group.

### {Embodiment 0.4}

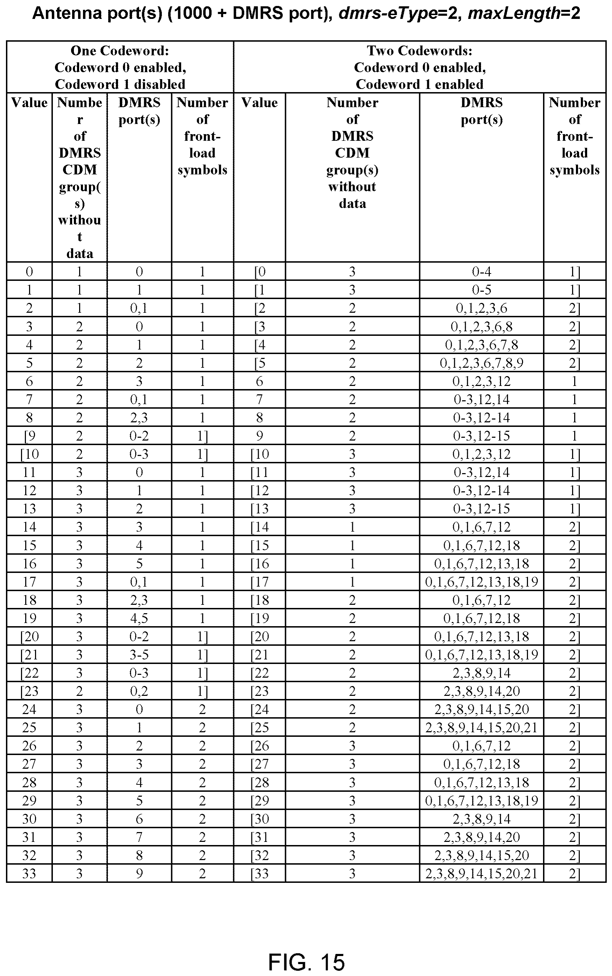

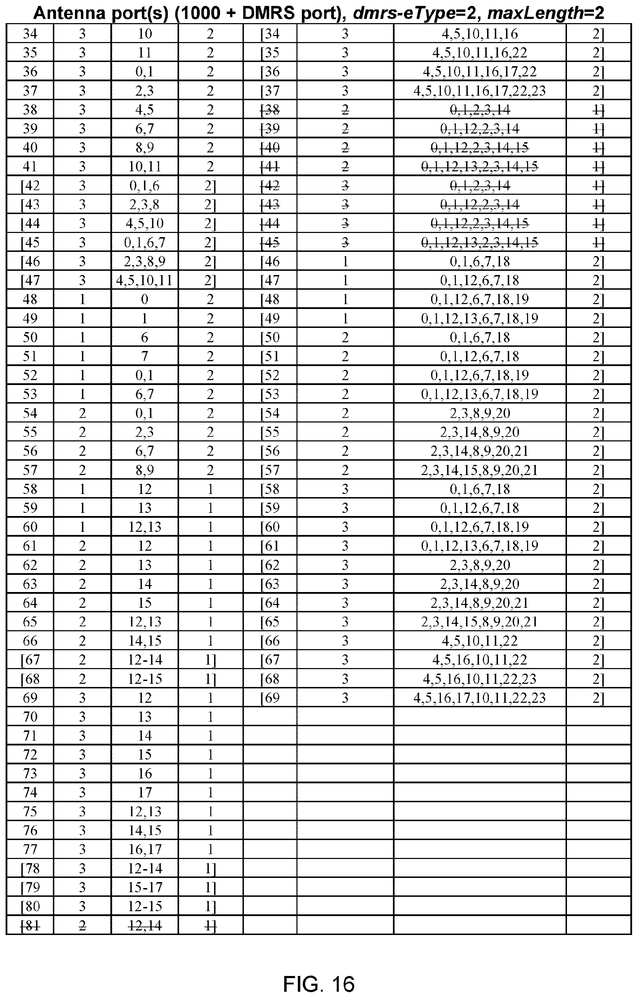

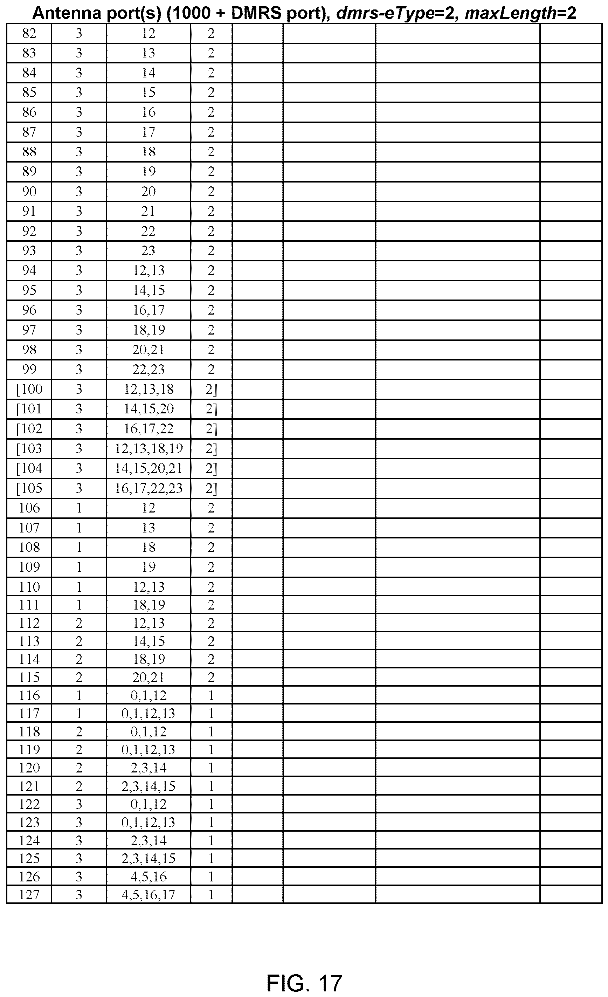

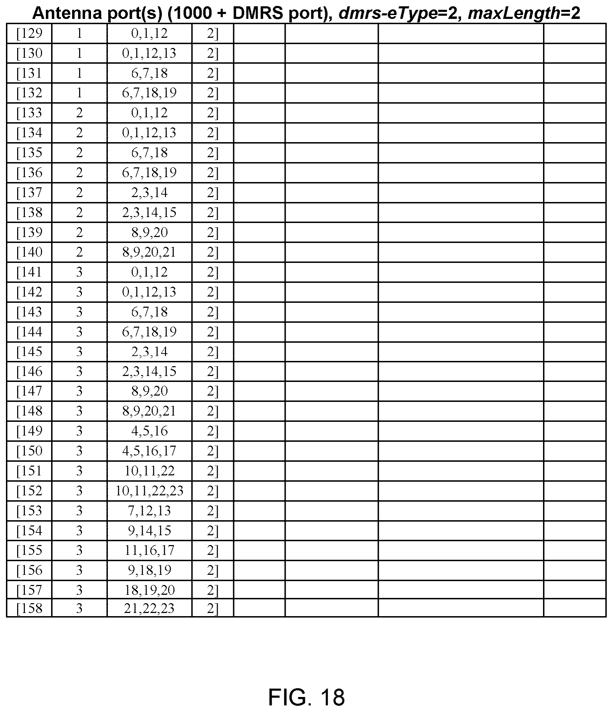

FIG. 15 shows a first part of an example of an antenna port table with respect to DMRS type = enhanced type 2 and maximum length = 2. FIG. 16 shows a second part of the example of the antenna port table with respect to DMRS type = enhanced type 2 and maximum length = 2. FIG. 17 shows a third part of the example of the antenna port table with respect to DMRS type = enhanced type 2 and maximum length = 2. FIG. 18 shows a fourth part of the example of the antenna port table with respect to DMRS type = enhanced type 2 and maximum length = 2. The antenna port table according to Embodiment 0.4 is shown over the four drawings, FIGS. 15 to 18, due to the number of rows. In other words, in the present example, FIGS. 15 and 18 are defined as one table with the four drawings combined.

In the antenna port table shown in the present example, Values = 0 to 57 for 1 CW may correspond to category 1, 58 to 115 and 157 to 158 may correspond to category 2, and 116 to 156 may correspond to category 3.

In the table of FIGS. 15 and 16, antenna port field values (Values) = 0 to 69 in a case of two codewords (2 CWs) each correspond to a rank of ranks 5 to 8.

The rows with Values = 9 to 10, 20 to 23, and 42 to 47 may not need to be deleted in a case of applying the MU scheduling restriction. The rows with Values = 67 to 68, 78 to 80, 100 to 105, and 153 to 158 may be deleted. The rows with Values = 129 to 132 may or may not be deleted. The rows with Values = 133 to 152 may not need to be deleted in a case of not applying the MU scheduling restriction.

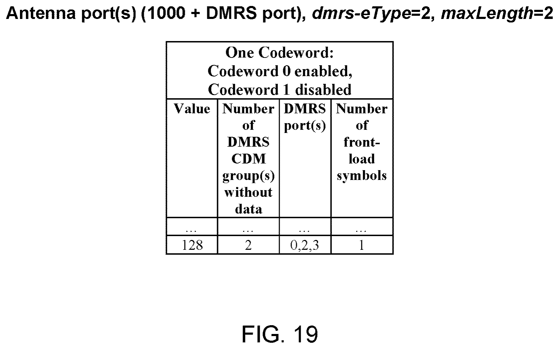

FIG. 19 shows another example of the antenna port table with respect to DMRS type = enhanced type 2 and maximum length = 2. FIG. 19 shows an entry for single-DCI based multi-TRP which may be added to the table of FIGS. 15 to 18 or may be defined as a table for (dedicated to) single-DCI based multi-TRP separately from and independently of FIGS. 15 to 18.

In a case where the row shown in FIG. 19 is indicated, the MU scheduling restriction may be applied. In other words, a UE does not expect multiplexing to another DMRS port in the same CDM group.

According to Embodiment 0 described above, a UE can appropriately judge a Rel-18 PDSCH DMRS port to be used.

### <Embodiment 1>

Embodiment 1 relates to the MU scheduling restriction between a plurality of UEs configured with the Rel-18 DMRS port.

In the present example, in order to support the above-described examples, the MU-MIMO scheduling restriction between a plurality of DMRS ports, in one CDM group/between a plurality of CDM groups, in enhanced type 1/enhanced type 2 will be described.

For example, in a case of a DMRS type = enhanced type 1/enhanced type 2, when 1 CW is scheduled for a UE, and antenna port mapping with a specific index in a new antenna port table (the above-described respective antenna port tables) is allocated to the UE, the UE may assume that all remaining orthogonal antenna ports are not associated with PDSCH transmission to another UE.

Here, the specific index in the new antenna port table may correspond to an entry with a row index indicated by a condition described below. In other words, the above-described assumption by the UE based on a certain condition may be interpreted as the MU scheduling restriction. The restriction and restriction 1/2 described above may be interchangeably interpreted.

The above-described "all remaining orthogonal antenna ports" may mean DMRS ports within the same CDM group (one CDM group) (within a CDM group) or DMRS ports within a plurality of CDM groups (within CDM groups). Alternatively, FDM between different CDM groups may be included.

For 2 CWs, the MU scheduling restriction may be applied. This allows quality of a PDSCH for 2 CWs to be improved. For 2 CWs, the MU scheduling restriction may not be applied. This enables multiplexing capacity of a PDSCH for 2 CWs to be improved, allowing cell capacity to be improved.

The UE may, when applying a DMRS type = enhanced type 1/enhanced type 2, control the above-described scheduling restriction (whether to perform the above-described assumption), based on a type of an enhanced type (enhanced type 1/enhanced type 2), a maximum DMRS length (1/2), whether to apply single-DCI based multi-TRP, and the number of CWs (1 CW/2 CWs).

Whether restriction 1/2 described above is required may depend on a UE capability. For a high-performance UE (a UE capable of large number of channel estimation), restriction 1/2 may not need to be applied. For a low-performance UE (a UE not capable of large number of channel estimation), restriction 1/2 may be applied.

The MU scheduling restriction may be switched depending on UE capability signaling. A UE may follow at least one of some operations below.
- Operation 1: In a case where a UE has not reported supporting of a specific UE capability and is configured/indicated with the Rel-18 DMRS port (the DMRS using the length-4 FD-OCC), restriction 1/2 may be applied to the UE.
- Operation 2: In a case where a UE has reported supporting of the specific UE capability and is configured/indicated with the Rel-18 DMRS port (the DMRS using the length-4 FD-OCC), restriction 1/2 may not be applied to the UE in some cases.

Regarding operation 2, in the case where the UE has reported supporting of the specific UE capability, the MU scheduling restriction/restriction 1/2 may be absent for the UE.

Depending on whether the specific UE capability is reported, the number of rows (antenna port field values) that the MU scheduling restriction is applied to may be different, in a certain antenna port table.

For a UE having not reported supporting of the specific UE capability, the MU scheduling restriction/restriction 1/2 may be applied with respect to all of the rows (antenna port field values) in a certain antenna port table.

For a UE having reported supporting of the specific UE capability, restriction 1/2 may be eased (may be eased as compared with the MU scheduling restriction/restriction 1/2 for a UE having not reported supporting of the specific UE capability). For example, for the UE having reported supporting of the specific UE capability, restriction 1/2 may be applied with respect to part of the rows (antenna port field values) in a certain antenna port table.

For the UE having not reported supporting of the specific UE capability, the MU scheduling restriction/restriction 1/2 may be applied with respect to X rows (X antenna port field values) in a certain antenna port table, and for the UE having reported supporting of the specific UE capability, the MU scheduling restriction/restriction 1/2 may be applied with respect to Y rows (Y antenna port field values) in a certain antenna port table. Here, X ≥ Y may be employed or X > Y may be employed.

The antenna port table may be defined per channel (for each of a PUSCH and a PDSCH), may be defined per DMRS type (for each of enhanced type 1 and enhanced type 2), or may be defined per maximum DMRS length (for each of maximum length = 1 and 2). The MU scheduling restriction is applied to the PDSCH, and thus the present embodiment may be limited to a case of PDSCH.

The specific UE capability may be reported per DMRS type (for each of enhanced type 1 and enhanced type 2) or may be reported per maximum DMRS length (for each of maximum length = 1 and 2). The specific UE capability may indicate whether the MU scheduling restriction is able to be eased.

The MU scheduling restriction/restriction 1/2 may be configured by using an RRC parameter. The MU scheduling restriction/restriction 1/2 depending on the specific UE capability may be configured by using an RRC parameter. The MU scheduling restriction/restriction 1/2 may be configured per DMRS type (for each of enhanced type 1 and enhanced type 2) or may be configured per maximum DMRS length (for each of maximum length = 1 and 2).

In Embodiments 1.1 to 1.4, the respective cases will be described below. In each case, the above-described tables (FIGS. 7 to 19) may be referenced to. In a case where a specific row index is deleted/omitted from the above-described tables, the row index appears in the following description may also be deleted/omitted.

### {Embodiment 1.1}

### (DMRS Type = Enhanced Type 1, Maximum Length = 1)

In enhanced DMRS configuration type 1, when 1 CW is scheduled for a UE and antenna port mapping with an index of at least one of value = {9, 10, 11, 30} in the tables of FIGS. 7 and 8 is allocated to the UE, the UE may assume that all remaining orthogonal antenna ports in the same CDM group are not associated with PDSCH transmission to another UE.

When 2 CWs are scheduled for a UE, the UE may assume that all remaining orthogonal antenna ports in the same CDM group are not associated with PDSCH transmission to another UE. In this case, FDM may be allowed for the UE.

When 2 CWs are scheduled for a UE and FDM is not allowed for the UE, the UE may assume that all remaining orthogonal antenna ports are not associated with PDSCH transmission to another UE.

### {Embodiment 1.2}

### (DMRS Type = Enhanced Type 1, Maximum Length = 2)

In enhanced DMRS configuration type 1, when 1 CW is scheduled for a UE and antenna port mapping with an index of at least one of value = {9, 10, 11, 24, 25, 26, 27, 28, 29, 30, 68} in the tables of FIGS. 9 to 11 is allocated to the UE, the UE may assume that all remaining orthogonal antenna ports in the same CDM group are not associated with PDSCH transmission to another UE.

When 2 CWs are scheduled for a UE, the UE may assume that all remaining orthogonal antenna ports in the same CDM group are not associated with PDSCH transmission to another UE. In this case, FDM may be allowed for the UE.

When 2 CWs are scheduled for a UE and FDM is not allowed for the UE, the UE may assume that all remaining orthogonal antenna ports are not associated with PDSCH transmission to another UE.

### {Embodiment 1.3}

### (DMRS Type = Enhanced Type 2, Maximum Length = 1)

In enhanced DMRS configuration type 2, when 1 CW is scheduled for a UE and antenna port mapping with an index of at least one of value = {9, 10, 20, 21, 22, 23, 33, 34, 44, 45, 46, 60} in the tables of FIGS. 12 to 14 is allocated to the UE, the UE may assume that all remaining orthogonal antenna ports in the same CDM group are not associated with PDSCH transmission to another UE.

When 2 CWs are scheduled for a UE, the UE may assume that all remaining orthogonal antenna ports in the same CDM group are not associated with PDSCH transmission to another UE. In this case, FDM may be allowed for the UE.

When 2 CWs are scheduled for a UE and FDM is not allowed for the UE, the UE may assume that all remaining orthogonal antenna ports are not associated with PDSCH transmission to another UE.

### {Embodiment 1.4}

### (DMRS Type = Enhanced Type 2, Maximum Length = 2)

In enhanced DMRS configuration type 2, when 1 CW is scheduled for a UE and antenna port mapping with an index of at least one of value = {9, 10, 20, 21, 22, 23, 42, 43, 44, 45, 46, 47, 67, 68, 78, 79, 80, 100, 101, 102, 103, 104, 105, 128} in the tables of FIGS. 15 and 19 is allocated to the UE, the UE may assume that all remaining orthogonal antenna ports in the same CDM group are not associated with PDSCH transmission to another UE.

When 2 CWs are scheduled for a UE, the UE may assume that all remaining orthogonal antenna ports in the same CDM group are not associated with PDSCH transmission to another UE. In this case, FDM may be allowed for the UE.

When 2 CWs are scheduled for a UE and FDM is not allowed for the UE, the UE may assume that all remaining orthogonal antenna ports are not associated with PDSCH transmission to another UE.

According to Embodiment 1 described above, a UE/base station can appropriately recognize the MU scheduling restriction.

### <Embodiment 2>

Embodiment 2 relates to the MU scheduling restriction between a UE configured with an existing (for example, Rel-15) DMRS port and a UE configured with the Rel-18 DMRS port. Details of Embodiment 1 may be employed in interpretation for Embodiment 2. Note that description of details overlapping with that of Embodiment 1 is omitted.

In Embodiment 2, a (another) UE configured with enhanced DMRS configuration type 1/2 and a UE having reported a UE capability to support the Rel-18 DMRS may be interchangeably interpreted.

### {Embodiment 2.1}

### (DMRS Type = Enhanced Type 1, Maximum Length = 1)

In enhanced DMRS configuration type 1, when 1 CW is scheduled for a UE and antenna port mapping with an index other than value = {0 to 11} in the tables of FIGS. 7 and 8 is allocated to the UE, the UE may assume that all remaining orthogonal antenna ports in the same CDM group are not associated with PDSCH transmission to another UE (a UE configured with enhanced DMRS configuration type 1).

When 2 CWs are scheduled for a UE, the UE may assume that all remaining orthogonal antenna ports in the same CDM group are not associated with PDSCH transmission to another UE (a UE configured with enhanced DMRS configuration type 1). In this case, FDM may be allowed for the UE.

### <Variation>

In a case where 1 CW is scheduled for a UE, the following combinations may be supported.
- Value = {0 to 8}: Multiplexing to Value = {0 to 8} indicating a Rel-15 DMRS port may be made in the same CDM group.
- Value = {3 to 8, 15 to 20, 26 to 29}: Multiplexing to a DMRS port that is of Value = {3 to 8} indicating a Rel-15 DMRS port and that is in a different CDM group may be made.

### {Embodiment 2.2}

### (DMRS Type = Enhanced Type 1, Maximum Length = 2)

In enhanced DMRS configuration type 1, when 1 CW is scheduled for a UE and antenna port mapping with an index other than value = {0 to 30} in the tables of FIGS. 7 and 8 is allocated to the UE, the UE may assume that all remaining orthogonal antenna ports in the same CDM group are not associated with PDSCH transmission to another UE (a UE configured with enhanced DMRS configuration type 1).

When 2 CWs are scheduled for a UE, the UE may assume that all remaining orthogonal antenna ports in the same CDM group are not associated with PDSCH transmission to another UE (a UE configured with enhanced DMRS configuration type 1). In this case, FDM may be allowed for the UE.

### <Variation>

In a case where 1 CW is scheduled for a UE, the following combinations may be supported.
- Value = {0 to 23}: Multiplexing to Value = {0 to 23} indicating a Rel-15 DMRS port may be made in the same CDM group.
- Value = {3 to 8, 34 to 39, 64 to 67}: Multiplexing to a DMRS port that is of Value = {3 to 8} indicating a Rel-15 DMRS port and that is in a different CDM group may be made.
- Value = {12 to 23, 43 to 54, 73 to 80}: Multiplexing to a DMRS port that is of Value = {12 to 23} indicating a Rel-15 DMRS port and that is in a different CDM group may be made.

### {Embodiment 2.3}

### (DMRS Type = Enhanced Type 2, Maximum Length = 1)

In enhanced DMRS configuration type 2, when 1 CW is scheduled for a UE and antenna port mapping with an index other than value = {0 to 23} in the tables of FIGS. 7 and 8 is allocated to the UE, the UE may assume that all remaining orthogonal antenna ports in the same CDM group are not associated with PDSCH transmission to another UE (a UE configured with enhanced DMRS configuration type 2).

When 2 CWs are scheduled for a UE, the UE may assume that all remaining orthogonal antenna ports in the same CDM group are not associated with PDSCH transmission to another UE (a UE configured with enhanced DMRS configuration type 2). In this case, FDM may be allowed for the UE.

### <Variation>

In a case where 1 CW is scheduled for a UE, the following combinations may be supported.
- Value = {0 to 23}: Multiplexing to Value = {0 to 23} indicating a Rel-15 DMRS port may be made in the same CDM group.
- Value = {3 to 8, 27 to 32, 50 to 53}: Multiplexing to a DMRS port that is of Value = {3 to 8} indicating a Rel-15 DMRS port and that is in a different CDM group may be made.
- Value = {11 to 22, 35 to 46, 54 to 59}: Multiplexing to a DMRS port that is of Value = {11 to 22} indicating a Rel-15 DMRS port and that is in a different CDM group may be made.

### {Embodiment 2.4}

### (DMRS Type = Enhanced Type 2, Maximum Length = 2)

In enhanced DMRS configuration type 2, when 1 CW is scheduled for a UE and antenna port mapping with an index other than value = {0 to 57} in the tables of FIGS. 7 and 8 is allocated to the UE, the UE may assume that all remaining orthogonal antenna ports in the same CDM group are not associated with PDSCH transmission to another UE (a UE configured with enhanced DMRS configuration type 2).

When 2 CWs are scheduled for a UE, the UE may assume that all remaining orthogonal antenna ports in the same CDM group are not associated with PDSCH transmission to another UE (a UE configured with enhanced DMRS configuration type 2). In this case, FDM may be allowed for the UE.

### <Variation>

In a case where 1 CW is scheduled for a UE, the following combinations may be supported.
- Value = {0 to 23}: Multiplexing to Value = {0 to 23} indicating a Rel-15 DMRS port may be made in the same CDM group.
- Value = {4 to 8, 61 to 66, 118 to 121}: Multiplexing to a DMRS port that is of Value = {4 to 8} indicating a Rel-15 DMRS port and that is in a different CDM group may be made.
- Value = {11 to 22, 69 to 80, 122 to 127}: Multiplexing to a DMRS port that is of Value = {11 to 22} indicating a Rel-15 DMRS port and that is in a different CDM group may be made.
- Value = {24 to 47, 82 to 105, 141 to 152}: Multiplexing to a DMRS port that is of Value = {24 to 47} indicating a Rel-15 DMRS port and that is in a different CDM group may be made.
- Value = {54 to 57, 112 to 115, 133 to 140}: Multiplexing to a DMRS port that is of Value = {54 to 57} indicating a Rel-15 DMRS port and that is in a different CDM group may be made.

### <Variations>

In a case where 2 CWs are scheduled for a UE, when FDM is not allowed between UEs configured with the Rel-18 DMRS port, it may be assumed that MU-MIMO between UE 1 configured with the Rel-15 DMRS port and UE 2 configured with the Rel-18 DMRS port is prohibited (the MU scheduling restriction may be applied).

In the case where 2 CWs are scheduled for a UE, when FDM is allowed between UEs configured with the Rel-18 DMRS port, MU-MIMO between UE 1 configured with the Rel-15 DMRS port and UE 2 configured with the Rel-18 DMRS port may be allowed (the MU scheduling restriction may not be applied) or may be prohibited (the MU scheduling restriction may be applied).

A UE capability indicating whether MU-MIMO between UE 1 configured with the Rel-15 DMRS port and UE 2 configured with the Rel-18 DMRS port is supportable may be defined. Such a UE capability may be one assuming a case of FDM, may be one assuming multiplexing in the same CDM group, or each one may be separately reported.

According to Embodiment 2 described above, a UE/base station can appropriately recognize the MU scheduling restriction.

### <Embodiment 3>

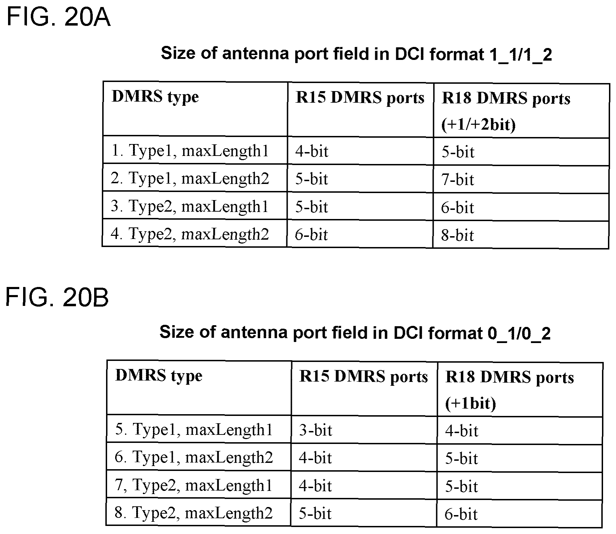

Embodiment 3 relates to a size of an antenna port field in DCI. FIGS. 20A and 20B show examples of rules A and B for a size of an antenna port field.

### <<Embodiment 3-1>>

In a case where the Rel-18 DMRS port is configured, an antenna port field in DCI format 1_1/1_2/0_1/0_2 may have a size obtained by increasing, by 1/2 bit(s), a size of an antenna port field in DCI format 1_1/1_2/0_1/0_2 in Rel. 15/17, irrespective of the configuration of the Rel-18 DMRS port. The size of the antenna port field in DCI format 1_1/1_2/0_1/0_2 may follow rule A for a size of an antenna port field in DCI format 1_1/1_2 (for PDSCH) shown in FIG. 20A and rule B for a size of an antenna port field in DCI format 0 1/0 2 (for PUSCH) shown in FIG. 20B. Rule A indicates case 1 (DMRS type = type 1 and maximum length = 1), case 2 (DMRS type = type 1 and maximum length = 2), case 3 (DMRS type = type 2 and maximum length = 1), and case 4 (DMRS type = type 2 and maximum length = 2). Rule B indicates case 5 (DMRS type = type 1 and maximum length = 1), case 6 (DMRS type = type 1 and maximum length = 2), case 7 (DMRS type = type 2 and maximum length = 1), and case 8 (DMRS type = type 2 and maximum length = 2). For the Rel-18 DMRS port, type 1 and type 2 may be interpreted as enhanced type 1 and enhanced type 2, respectively.

### <<Embodiment 3-2>>

In a case where the Rel-18 DMRS port is configured, a size of an antenna port field in DCI format 1_1/1_2/0_1/0_2 may be determined, based on the configuration of the Rel-18 DMRS port. The size may follow at least one of some options below.

### - Option 2-1

The antenna port field in DCI format 1_1/1_2/0_1/0_2 has a size obtained by increasing, by 1 bit, a size of the antenna port field in DCI format 1_1/12/0_1/0_2 in Rel. 15/17. The size of the antenna port field in DCI format 1_1/1_2/0_1/0_2 in this option may follow rule A/B.

### - Option 2-2

The antenna port field in DCI format 1_1/1_2/0_1/0_2 has a size obtained by increasing, by X bits, a size of the antenna port field in DCI format 1_1/1_2/0_1/0_2 in Rel. 15/17. X may be any one of 1, 2, 3, ..., or may be any one of 2, 3, .... The value of X may be defined in a specification, or may be configured by using higher layer signaling.

The value of X may depend on a specific RRC parameter. In a case where no specific RRC parameter is configured, X may be X = 1. In this case, the antenna port field in DCI format 1_1/1_2/0_1/0_2 may be possible to indicate values from 0 to Y - 1 (from the first row to the Y-th row in the antenna port table). When the size of the antenna port field in DCI format 1_1/1_2/0_1/0_2 in Rel. 15/17 is M bits, Y may be 2^{(M + 1)} or smaller. For example, in a case where the specific RRC parameter is configured, X may be X = 2. In this case, the antenna port field in DCI format 1_1/1_2/0_1/0_2 may be possible to indicate values from 0 to Z - 1 (from the first row to the Z-th row in the antenna port table). Z may be greater than 2^{(M + 1)} and 2^{(M + 2)} or smaller. The operation for the case where no specific RRC parameter is configured and the operation for the case where the specific RRC parameter is configured may be opposite. The case where the specific RRC parameter is configured may be interpreted as a case where the value of the specific RRC parameter is "enable." The case where no specific RRC parameter is configured may be interpreted as a case where the value of the specific RRC parameter is "disable."

### - Option 2-3

The antenna port field in DCI format 1_1/1_2/0_1/0_2 has a size obtained by increasing, by 1 bit, a size of the antenna port field in DCI format 1_1/1_2/0_1/0_2 in Rel. 15/17. The size of the antenna port field in DCI format 1_1/1_2/0_1/0_2 in this option may follow rule A/B. Furthermore, with use of an RRC IE/MAC CE, values indicatable in the antenna port field (rows indicatable in the antenna port table) may be indicated/restricted/limited.

Option 2-1 may be applied to cases 1, 3, 5, 6, 7, and 8 in rules A and B. Option 2-2/2-3 may be applied to cases 2 and 4 in rules A and B. With such application, a change in a specification is limited only to cases in need, allowing the UE load to be reduced.

According to the embodiment, a UE/base station can appropriately recognize the size/value of the antenna port field.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or any combination of these.

In a case where the notification is performed by using a MAC CE, the MAC CE may be identified by a new logical channel ID (LCID), not defined in any existing standard, being included in a MAC subheader.

In a case where the notification is performed by using DCI, the notification may be performed by using a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or any combination of these.

In a case where the notification is performed by using a MAC CE, the MAC CE may be identified by a new LCID, not defined in any existing standard, being included in a MAC subheader.

In a case where the notification is performed by using UCI, the notification may be transmitted by using a PUCCH or a PUSCH.

Notification of any information from a UE in the above-described embodiments may be performed periodically, semi-persistently, or aperiodically.

### {Application of Each Embodiment}

At least one of the above-described embodiments may be applied to a case where a specific condition is satisfied. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting specific processing/operation/control/information for at least one of the above-described embodiments;
- specific UE capability.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one embodiment of the above-described embodiments may be applied to a case where specific information related to the embodiment (or performing of operation for the embodiment) is configured/activated/triggered for the UE by higher layer signaling/physical layer signaling. For example, the specific information may be information indicating enabling of functions for the respective embodiments, any RRC parameter for a specific release (for example, Rel. 18/19), or the like.

In a case where the UE does not support at least one of the specific UE capability or is not configured with the specific information, the UE may apply, for example, Rel-15/16 operation.

### (Supplementary Note)

Regarding one embodiment of the present disclosure, the following supplementary notes of the invention will be given.

### {Supplementary Note 1}

A terminal including:
a receiving section that receives, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords; and
a control section that controls, based on the combination, a scheduling restriction for an other terminal, wherein
the combination includes an entry indicating a DMRS port using a frequency domain orthogonal cover code (FD-OCC) having a length of 4.

### {Supplementary Note 2}

The terminal according to supplementary note 1, wherein the scheduling restriction is to assume that orthogonal antenna ports in a same CDM group are not associated with transmission of the downlink shared channel to the other terminal.

### {Supplementary Note 3}

The terminal according to supplementary note 1 or 2, wherein the control section controls the scheduling restriction, based on a capability to support the DMRS port using the FD-OCC having the length of 4.

### {Supplementary Note 4}

The terminal according to any one of supplementary notes 1 to 3, wherein the control section determines a size of a DCI field indicating the DMRS port using the FD-OCC having the length of 4, by adding a specific value to a size of a DCI field for a DMRS using an FD-OCC having a length of 2.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

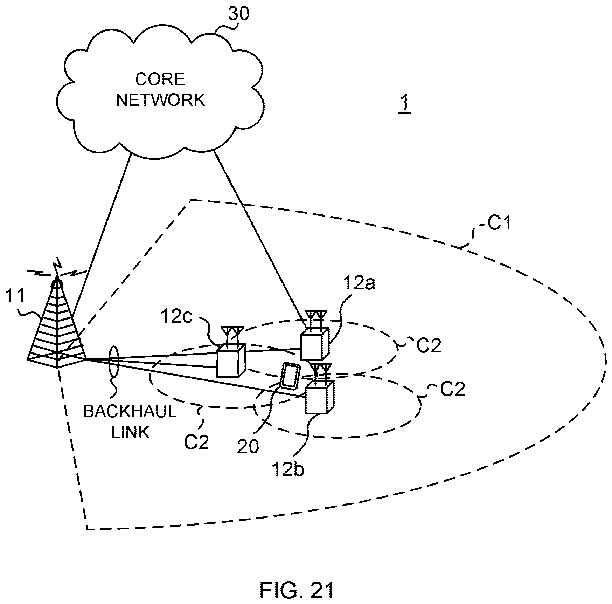

FIG. 21 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

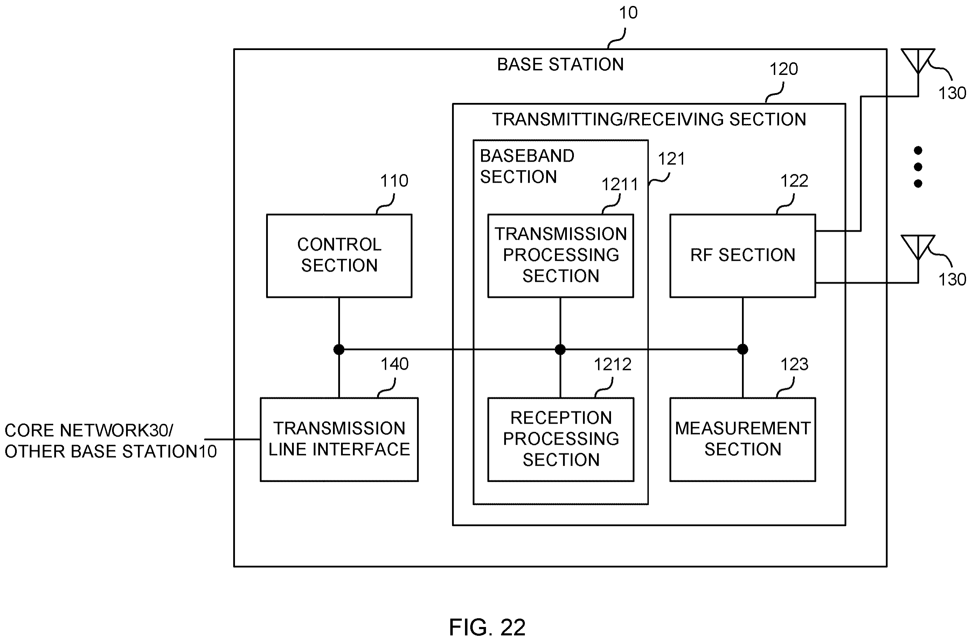

FIG. 22 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords.

The control section 110 may control, based on the combination, a scheduling restriction for an other terminal.

### (User Terminal)

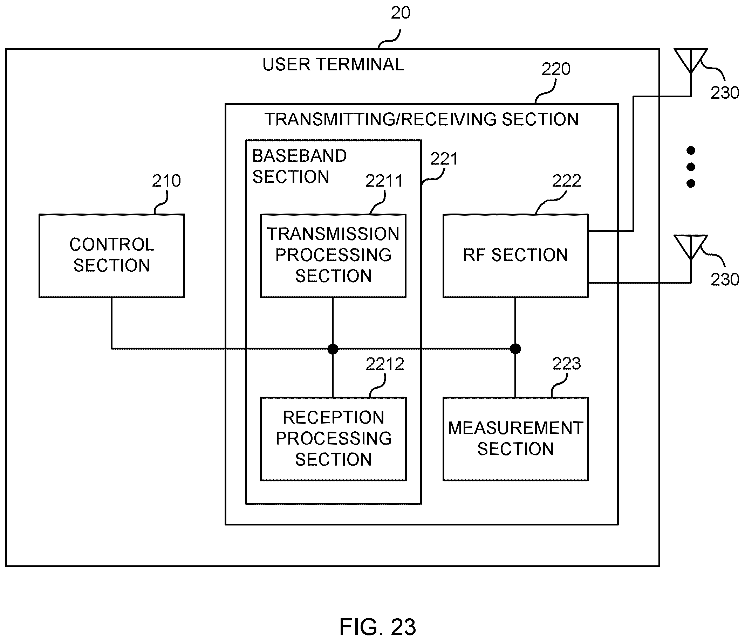

FIG. 23 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a channel measurement resource. The channel measurement resource may be, for example, a non-zero power (NZP) CSI-RS resource. The measurement section 223 may derive interference measurement for CSI calculation, based on an interference measurement resource. The interference measurement resource may be at least one of an NZP CSI-RS resource for interference measurement, a CSI-interference measurement (IM) resource, and the like. Note that the CSI-IM may be referred to as CSI-interference measurement (IM) and that the CSI-IM and a zero power (ZP) CSI-RS may be interchangeably interpreted. Note that, in the present disclosure, CSI-RS, NZP CSI-RS, ZP CSI-RS, CSI-IM, CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords. The combination may include an entry indicating a DMRS port using a frequency domain orthogonal cover code (FD-OCC) having a length of 4.

The control section 210 may control, based on the combination, a scheduling restriction for an other terminal. The scheduling restriction may be to assume that orthogonal antenna ports in the same CDM group are not associated with transmission of the downlink shared channel to such an other terminal. The control section 210 may control the scheduling restriction, based on a capability to support the DMRS port using the FD-OCC having the length of 4. The control section 210 may determine a size of a DCI field indicating the DMRS port using the FD-OCC having the length of 4, by adding a specific value to a size of a DCI field for a DMRS using an FD-OCC having a length of 2.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

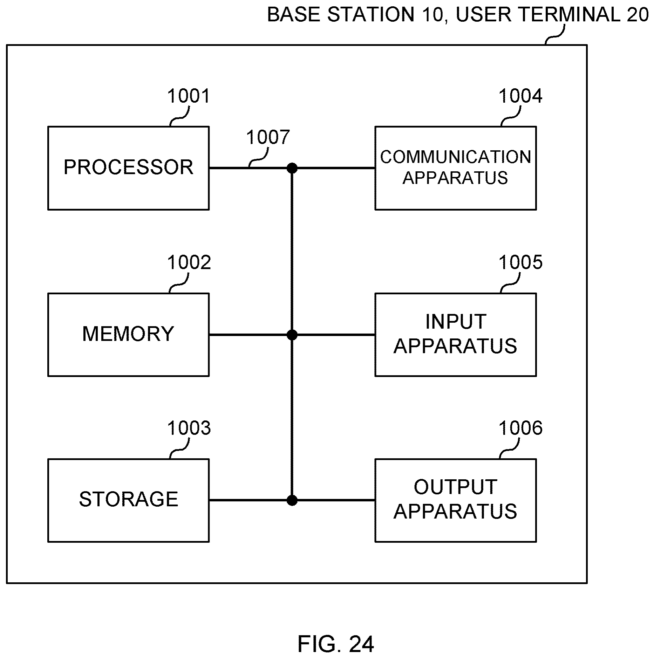

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

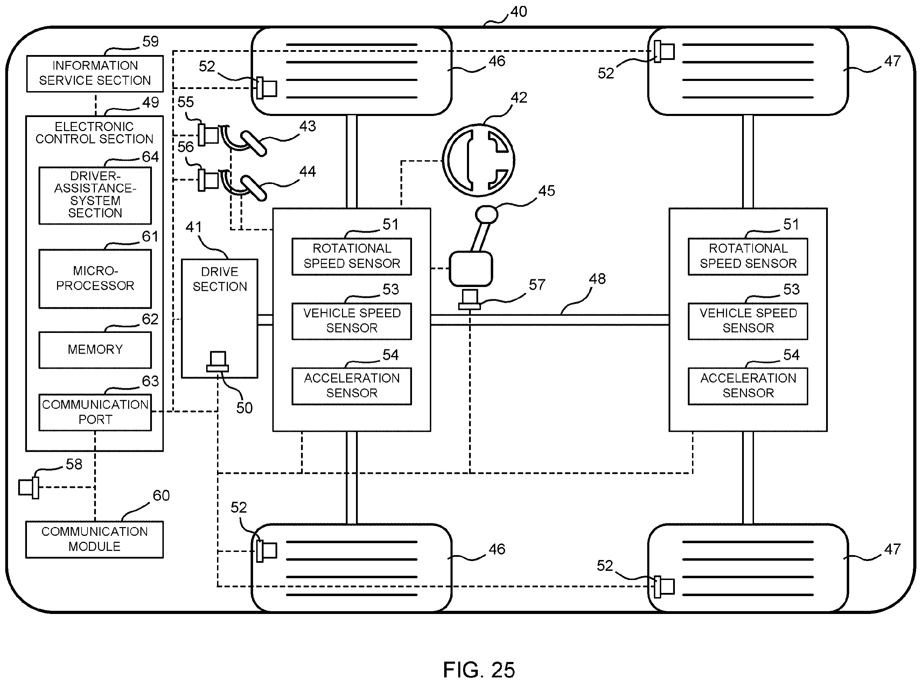

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords; and
a control section that controls, based on the combination, a scheduling restriction for an other terminal, wherein
the combination includes an entry indicating a DMRS port using a frequency domain orthogonal cover code (FD-OCC) having a length of 4.

2. The terminal according to claim 1, wherein
the scheduling restriction is to assume that orthogonal antenna ports in a same CDM group are not associated with transmission of the downlink shared channel to the other terminal.

3. The terminal according to claim 1, wherein
the control section controls the scheduling restriction, based on a capability to support the DMRS port using the FD-OCC having the length of 4.

4. The terminal according to claim 1, wherein
the control section determines a size of a DCI field indicating the DMRS port using the FD-OCC having the length of 4, by adding a specific value to a size of a DCI field for a DMRS using an FD-OCC having a length of 2.

5. A radio communication method for a terminal, comprising:
receiving, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords; and
controlling, based on the combination, a scheduling restriction for an other terminal, wherein
the combination includes an entry indicating a DMRS port using a frequency domain orthogonal cover code (FD-OCC) having a length of 4.

6. A base station comprising:
a transmitting section that transmits, when a combination of a category 1 demodulation reference signal (DMRS) port and a category 2 DMRS port in at least one code division multiplexing (CDM) group is supported, downlink control information (DCI) that indicates the combination and schedules a downlink shared channel for one or two codewords; and
a control section that controls, based on the combination, a scheduling restriction for an other terminal, wherein
the combination includes an entry indicating a DMRS port using a frequency domain orthogonal cover code (FD-OCC) having a length of 4.
